# EUROPÄISCHE PATENTSCHRIFT

(11) **EP 3 424 765 B1**
(45) Veröffentlichungstag und Bekanntmachung des Hinweises auf die Patenterteilung: **11.09.2019**
(21) Anmeldenummer: 18182108.3
(22) Anmeldetag: 06.07.2018
(51) Int. Cl.: B60K 15/04, B60K 15/05, B60K 15/03

(54) **ELEKTRISCH BETÄTIGBARE TANKKLAPPENEINRICHTUNG FÜR EIN FAHRZEUG UND EIN SOLCHES FAHRZEUG**
ELECTRICALLY ACTUATED TANK FLAP DEVICE FOR A VEHICLE AND A VEHICLE OF THIS NATURE
DISPOSITIF FORMANT TRAPPE DE RÉSERVOIR À COMMANDE ÉLECTRIQUE POUR UN VÉHICULE ET UN TEL VÉHICULE

(30) Priorität: 06.07.2017 DE 102017115106
(43) Veröffentlichungstag der Anmeldung: 09.01.2019
(73) Patentinhaber: Kunststoff Schwanden AG, 8762 Schwanden (CH)
(72) Erfinder: Ackermann, Saimen, 8753 Mollis (CH); Eulitz, Falk, 8773 Haslen (CH)
(74) Vertreter: Flach Bauer Stahl Patentanwälte Partnerschaft mbB

(56) Entgegenhaltungen:
- EP-A1- 2 899 057
- DE-A1-102016 223 010
- FR-A1- 2 998 102
- US-A1- 2014 176 069
- US-A1- 2016 083 981

## Beschreibung

Die Erfindung betrifft eine elektrisch betätigbare Tankklappeneinrichtung für ein Fahrzeug und ein solches Fahrzeug. Bei dem Fahrzeug handelt es sich bevorzugt um ein Elektrofahrzeug.

Bei Elektrofahrzeugen und teilweise auch bei Hybridfahrzeugen muss eine Betankung, insbesondere das Aufladen von Energiespeichereinrichtungen wie Akkumulatoren in regelmäßigen Abständen erfolgen. Ein derartiger Ladevorgang dauert allerdings, anders als bei herkömmlichen Fahrzeugen mit Verbrennungsantrieb, deutlich länger. Die hierfür notwendigen Ladestationen sind auf Autobahnen und in Städten verteilt angeordnet. Im Gegensatz zum Betanken von herkömmlichen Fahrzeugen mit fossilen Energieträgern findet das Aufladen der Energiespeicher bei Elektrofahrzeugen überwiegend nicht an zentralen Orten, sondern an einer Vielzahl von dezentral angeordneten Stromtankstellen statt, die verstreut im Stadtgebiet oder auf Autobahnen angeordnet sind. Derartige Stromtankstellen können an Restaurants, in Tiefgaragen, auf Parkplätzen von Supermärkten und an Laternen angeordnet sein. Um den Ladevorgang vollständig abzuschließen, ist es je nach Fahrzeugtyp und Füllstand der Energiespeichereinrichtung notwendig, dass das Elektrofahrzeug teilweise mehrere Stunden an der Stromtankstelle geparkt werden muss. Diese Stromtankstellen befinden sich dabei häufig im Freien. Sie umfassen neben der notwendigen Leistungselektronik, um einen entsprechende Ladestrom bereitstellen zu können, ein Ladekabel, an dessen freiem Ende ein Ladestecker in Form einer Buchse oder eines Steckers angebracht ist. Das Elektrofahrzeug umfasst außerdem eine entsprechende Tankklappeneinrichtung, die eine Tankmulde verdeckt, in welcher eine Ladebuchse in Form eines Steckers oder einer Buchse angeordnet ist. Um den Ladevorgang zu starten, muss das Ladekabel der Stromtankstelle unter Herstellung einer Steckverbindung mit der Ladebuchse des Elektrofahrzeugs verbunden werden. Sobald dies geschehen ist, erfolgt eine Verriegelung des Ladesteckers an der Ladebuchse. Ein unbefugtes Abziehen des Ladesteckers wird dadurch verhindert und ist erst durch den Fahrzeughalter wieder möglich.

Aus der JP 2012 - 34 543 A und der US 2016 / 0 083 981 A1 sind elektrisch angetriebene Verschlussdeckel bekannt, die eine Tankmulde verschließen. Diese Verschlussdeckel können von einer Schließstellung in eine Offenstellung verfahren werden. Während des Betankungsvorgangs des Fahrzeugs können diese Verschlussdeckel in eine Zwischenstellung verfahren werden. Die Zwischenstellung wird ausschließlich durch den Einsatz von Motorstromsensoren oder berührungslos arbeitenden Abstandssensoren ermittelt.

Die DE 10 2016 202 214 A1 zeigt ebenfalls eine Verschlussklappe zum zumindest teilweisen Verschließen einer Verschlussöffnung eines Kraftfahrzeugs. Eine Antriebsvorrichtung ist dabei über ein Zahnradgetriebe, welches ein Schneckenrad umfassen kann, mit der Verschlussklappe verbunden.

Auch aus der DE 20 2016 100 445 U1 ist eine entsprechende Verschlussvorrichtung bekannt. Auch hier kommt ein Schneckengetriebe zum Einsatz. Selbiges ergibt sich auch aus der DE 198 45 088 A1 und der DE 20 2011 105 059 U1.

Aus der DE 10 2011 090 205 A1 ist ein entsprechender Tankdeckel bekannt, welcher eine Tankmulde verschließt und diese für einen Betankungsvorgang freigeben kann. Dieser Tankdeckel wird in zwei getrennt voneinander verlaufenden Bewegungsbahnen verschoben. In einer ersten Bewegungsbahn, entlang einer Geraden, wird der Tankdeckel von der Tankmulde abgehoben, wohingegen er in einer zweiten, sich daran anschließenden Bewegungsbahn, zur Seite verdreht wird. Sobald der Tankdeckel zur Seite verdreht ist, ist die Tankmulde geöffnet und von außen her zugänglich. Der Tank- bzw. Ladevorgang kann beginnen.

Nachteilig an der DE 10 2011 090 205 A1 ist, dass die Lademulde während des gesamten Tankvorgangs äußeren Witterungseinflüssen ausgesetzt ist. Außerdem sind bei der Anordnung der DE 10 2011 090 205 A1 sowohl der Ladestecker als auch der Tankdeckel selbst gegen Beschädigungen nur unzureichend geschützt.

Es ist daher die Aufgabe der vorliegenden Erfindung eine elektrisch betätigbare Tankklappeneinrichtung zu schaffen, durch die die Tankmulde während des Ladevorgangs bzw. Tankvorgangs eines Fahrzeugs bestmöglich geschützt ist. Gleiches soll auch für den verwendeten Ladestecker und die Tankklappe selbst gelten.

Die Aufgabe wird durch die elektrisch betätigbare Tankklappeneinrichtung für ein Fahrzeug, insbesondere ein Elektrofahrzeug gemäß dem Anspruch 1 und durch ein eben solches Fahrzeug gemäß dem Anspruch 15 gelöst. In den Ansprüchen 2 bis 14 sind vorteilhafte Weiterbildungen der erfindungsgemäßen elektrisch betätigbaren Tankklappeneinrichtung angegeben.

Die erfindungsgemäße elektrisch betätigbare Tankklappeneinrichtung eignet sich grundsätzlich für motorisch angetriebene Fahrzeuge im Allgemeinen und für Elektrofahrzeuge im Speziellen. Die Tankklappeneinrichtung umfasst eine Tankmulde, die insbesondere aus Kunststoff besteht und zum Einsetzen in eine Karosserie des (Elektro-)Fahrzeugs vorgesehen ist. Die Tankmulde umfasst zumindest eine (Stecker-)Öffnung, die von einer Ladebuchse und/oder einem Tankeinfüllstutzen durchsetzt ist. Diese Ladebuchse ist mit der Leistungselektronik des Elektrofahrzeugs verbunden. Es sind weiterhin eine Steuereinrichtung, ein Elektromotor und eine Tankklappe vorgesehen. Die Tancklappe ist gegenüber der Tankmulde schwenkbar angeordnet. Die Steuereinrichtung ist dazu ausgebildet, den Elektromotor derart anzusteuern, dass eine Motorwelle des Elektromotors in eine erste Drehrichtung und in eine entgegengesetzte zweite Drehrichtung dreht. Die Tankklappe steht mit dem Elektromotor in Wirkverbindung, wobei ein Drehen der Motorwelle des Elektromotors in die erste Drehrichtung dazu führt, dass die Tankklappe von einer Schließstellung, in welcher die Tankklappe die Tankmulde (vollständig) verschließt, in eine Offenstellung, in welcher ein Ladestecker in die Ladebuchse einführbar ist, verschwenkbar ist. Ein Drehen der Motorwelle des Elektromotors in die zweite Drehrichtung führt dagegen dazu, dass die Tankklappe von der Offenstellung wieder zurück in die Schließstellung verschwenkbar ist. Die Steuereinrichtung ist ferner dazu ausgebildet, zu detektieren, ob ein Ladestecker in die Ladebuchse und/oder eine Zapfpistole in den Tankeinfüllstutzen eingesetzt ist, wobei die Steuereinrichtung bei einer solchen erfolgreichen Detektion, also wenn beispielweise ein Ladestecker in der Ladebuchse einsetzt ist, weiter dazu ausgebildet ist, den Elektromotor derart anzusteuern, dass dieser die Tankklappe von der Offenstellung in eine Zwischenstellung verschwenkt, wobei sich die Zwischenstellung zwischen der Offenstellung und der Schließstellung befindet, wodurch die Tankklappe in der Zwischenstellung die Tankmulde teilweise verschließt. In der Zwischenstellung ist die Tancklappe zu dem Ladestecker und/oder der Zapfpistole beabstandet (berührungslos) angeordnet, wobei die Position der Zwischenstellung in einer Speichereinheit hinterlegt ist, wobei die Steuereinheit dazu ausgebildet ist, den Elektromotor derart anzusteuern, dass dieser die Tankklappe bis zu der Position verschwenkt, die in der Speichereinheit für die Zwischenstellung hinterlegt ist. Dabei lädt die Steuereinheit die Position für die Zwischenstellung aus der Speichereinheit.

Die erfindungsgemäße elektrisch betätigbare Tankklappeneinrichtung sieht daher vor, dass die Tankmulde durch die Tankklappe zumindest teilweise wieder elektronisch verschlossen wird, wenn ein Ladevorgang bzw. Tankvorgang stattfindet bzw. wenn in die Ladebuchse ein Ladestecker eingesetzt ist. Ein solcher Ladevorgang kann bei Elektrofahrzeugen mehrere Stunden in Anspruch nehmen, wobei dadurch, dass die Tankklappe die Zwischenstellung einnimmt, die Tankmulde gegenüber äußeren Witterungseinflüssen (z.B. Regen, Schnee) besser geschützt ist. Gleichzeitig sind auch der Ladestecker und die Tankklappe selbst gegen Vandalismus besser geschützt. So steht die Tankklappe weniger weit von dem Elektrofahrzeug vor. Diese gespeicherte Zwischenstellung kann insbesondere durch Einsatz eines Schrittmotors genau erreicht werden. Grundsätzlich wäre es hier noch möglich einen Motorstromsensor zu verwenden, der den Motorstrom des Elektromotors misst, um die Stellung der Tankklappe noch genauer feststellen zu können als dies mit dem Schrittmotor alleine bereits möglich ist. Die Zwischenstellung wird insbesondere derart festgelegt, dass die Tankklappe bei den bekannten Arten von Ladesteckern und Zapfpistolen in der Zwischenstellung diese gerade eben nicht berührt. Wie später noch erläutert wird, kann die Zwischenstellung auch in Abhängigkeit des detektierten Typs von eingestecktem Ladestecker bzw. verwendeter Zapfpistole unterschiedlich gewählt werden.

Im Weiteren wird nicht mehr von einem Fahrzeug im Allgemeinen, sondern von einem Elektrofahrzeug im Speziellen gesprochen. In diesem Zusammenhang wird betont, dass die nachfolgend gemachten Ausführungen zu dem Elektrofahrzeug auch für Hybridfahrzeuge oder für Fahrzeuge gelten, die lediglich Verbrennungsmotoren umfassen. Die Ausführungen, die den Ladestecker betreffen, können ergänzend oder alternativ auch für die Zapfpistole gemacht werden (Ausnahme: Verriegelung).

Hierzu umfasst die Tankklappeneinrichtung in einer weiteren Ausführungsform eine Sensoreinrichtung, die einen Motorstromsensor zur Messung eines Motorstroms des Elektromotors und/oder einen Abstandssensor umfasst. Die Sensoreinrichtung ist dabei dazu ausgebildet, die Sensordaten an die Steuereinrichtung zu übertragen. Die Steuereinrichtung wertet diese Sensordaten insbesondere bzw. ausschließlich bei einem detektierten Ladestecker, also bei einem eingesteckten Ladestecker in die Ladebuchse aus. Die Steuereinrichtung ist dazu ausgebildet, einen durch die Sensoreinrichtung erfassten Motorstromwert des Motorstromsensors mit einem Stromschwellwert zu vergleichen, wobei der Elektromotor, der die Tankklappe von der Offenstellung in die Schließstellung verschwenkt, bei Erreichen oder Überschreiten des Stromschwellwerts gestoppt wird, wodurch die Zwischenstellung erreicht wird. Besonders vorteilhaft hierbei ist, dass der Motorstrom ein Indiz dafür ist, ob die Tankklappe den Ladestecker berührt. Für den Fall, dass die Tankklappe auf den Ladestecker aufläuft, steigt die Last an dem Elektromotor an und der Stromverbrauch nimmt zu. Somit kann der Stromverbrauch als Indiz dafür gesehen werden, ob die Tankklappe in mechanischem Kontakt zu dem Ladestecker steht oder nicht.

Die gespeicherte Zwischenstellung oder eine neue Zwischenstellung wird dadurch erreicht, dass die Sensoreinrichtung einen Abstandswert zwischen der Tankklappe und dem Ladestecker mit einem Abstandsschwellwert vergleicht. Ein solcher Abstandswert wird dann gemessen, wenn der Elektromotor die Tankklappe von der Offenstellung in die Schließstellung mit eingestecktem, also detektiertem Ladestecker verschwenkt. Bei Erreichen oder Unterschreiten des Abstandsschwellwertes wird der Elektromotor gestoppt und die Tancklappe verbleibt in der Zwischenstellung. Die Verwendung eines solchen Abstandssensors kann einen zusätzlichen Schutz für den Fall bedeuten, dass bei der gespeicherten Zwischenstellung dennoch ein Auflaufen der Tankklappe auf den Ladestecker oder einen anderen Gegenstand stattfinden würde. In diesem Fall wird die Bewegung vor dem Auflaufen bzw. Berühren gestoppt. In diesem Fall wird zwar nicht die gespeicherte Zwischenstellung eingenommen, dafür allerdings eine neue Zwischenstellung.

Erfindungsgemäß ist die Zwischenstellung herstellerseitig fest in die Steuereinrichtung einprogrammiert. Es könnten ebenso mehrere Zwischenstellungen einprogrammiert werden, wobei die Steuereinrichtung in der Lage ist, die entsprechende Stromtankstelle, also die entsprechende Ladestation bzw. ihren Typ zu detektieren und aufgrund dieser Detektion die entsprechende Zwischenstellung auszuwählen, die zu den Abmessungen des Ladesteckers der detektierten Stromtankstelle korrespondiert. Eine derartige Detektion kann im einfachsten Fall über die Ladespannung bzw. den Ladestrom erfolgen. Wird z.B. eine Spannung von 230 Volt erkannt, dann wird von einem anderen Stecker ausgegangen als wenn eine andere bzw. höhere Spannung wie beispielsweise 400 Volt erkannt wird. Grundsätzlich könnte der Steckertyp auch berührungslos oder über das Ladeprotokoll mitgeteilt werden. Dies würde dann direkt beim Einstecken oder unmittelbar nach Beginn des Ladevorgangs erfolgen.

In einem weiteren besonderen Ausführungsbeispiel dient der Verlauf des gemessenen Motorstroms auch dazu, auf den Zustand des Elektromotors zu schließen. So kann der Verlauf des gemessenen Motorstroms mit einem Referenzverlauf verglichen werden. Dies wird insbesondere dann gemacht, wenn Tankklappe von der Schließstellung in die Offenstellung bzw. von der Offenstellung in die Schließstellung oder von der Zwischenstellung in die Offenstellung verschwenkt wird. Für den Fall, dass die Abweichung der beiden Stromverläufe größer als ein Schwellwert ist, kann ein Fehler in einen Fehlerspeicher geschrieben werden. Insbesondere handelte es sich hierbei um einen OBD-Fehler (engl. On Board Diagnostic). Dieser Fehler kann in regelmäßigen Wartungsabständen in einer Fachwerkstatt ausgelesen werden bzw. direkt von dem Elektrofahrzeug über eine Sende- und Empfangseinrichtung drahtlos an eine entsprechende Fachwerkstatt übermittelt werden.

In einer weiteren Ausführungsform ist die Steuereinrichtung außerdem dazu ausgebildet zu detektieren, ob eine Zentralverriegelungseinrichtung des Elektrofahrzeugs dieses verriegelt. Ergänzend oder alternativ dazu ist die Steuereinrichtung auch dazu ausgebildet, zu detektieren, ob eine Ladestecker-Verriegelungseinrichtung des Elektrofahrzeugs einen in die Ladebuchse eingesteckten Ladestecker in dieser verriegelt, so dass er nicht mehr abgezogen werden kann. In derartigen Fällen ist die Steuereinrichtung dann dazu ausgebildet, den Elektromotor derart anzusteuern, dass dieser die Tankklappe von der Offenstellung in die Zwischenstellung verschwenkt. Dies bedeutet, dass die Zwischenstellung nur dann eingenommen wird, wenn die Zentralverriegelungseinrichtung das Elektrofahrzeug verriegelt bzw. wenn die Ladestecker-Verriegelungseinrichtung des Elektrofahrzeugs den Ladestecker in der Ladebuchse verriegelt. Derartige Fälle sind ein Indiz dafür, dass der Fahrer des Elektrofahrzeugs den Ladestecker nicht nochmals aus der Ladebuchse entfernen möchte.

Im Umkehrschluss ist die Steuereinrichtung vorzugsweise auch dazu ausgebildet zu detektieren, ob die Zentralverriegelungseinrichtung das Elektrofahrzeug entriegelt bzw. ob die Ladestecker-Verriegelungseinrichtung den Ladestecker in der Ladebuchse entriegelt. In einem solchen Fall ist die Steuereinrichtung wiederum dazu ausgebildet, den Elektromotor derart anzusteuern, dass dieser die Tankklappe von einer Zwischenstellung in die Offenstellung verschwenkt. Der Fahrer des Elektrofahrzeugs hat in diesem Fall ungehinderten Zugang zum Ladestecker und kann diesen aus der Ladebuchse entfernen.

Bevorzugt ist die Steuereinrichtung bei Detektion eines eingesetzten Ladesteckers bzw. einer eingesetzten Zapfpistole dazu ausgebildet, ein Starten oder Bewegen des Fahrzeugs zu verhindern. Beispielsweise kann die (Hand-)Bremse aktiviert bleiben oder das Einlegen eines Ganges kann verhindert werden.

Besonders bevorzugt umfasst die Steuereinrichtung auch eine Sende- und Empfangsvorrichtung, die dazu ausgebildet ist, ein Funksignal von einem Autoschlüssel des Elektrofahrzeugs und/oder von einem bestimmten mobilen Endgerät (z.B. Smartphone) und/oder von einem Ladestecker (und z.B. einer Zapfpistole) innerhalb einer bestimmten Entfernung zu empfangen. Die Steuereinrichtung ist dann dazu ausgebildet, den Elektromotor derart anzusteuern, dass dieser die Tankklappe von einer Zwischenstellung in die Offenstellung verschwenkt, wenn die Sende- und Empfangsvorrichtung ein derartiges Funksignal von dem Autoschlüssel und/oder von dem mobilen Endgerät innerhalb einer bestimmten Entfernung, also insbesondere innerhalb eines bestimmten Radius um das Elektrofahrzeug herum, empfängt. Umgekehrt ist die Steuereinrichtung dazu ausgebildet, den Elektromotor derart anzusteuern, dass dieser die Tankklappe von der Offenstellung in die Zwischenstellung verschwenkt, wenn die Sende- und Empfangsvorrichtung kein entsprechendes Funksignal von dem Autoschlüssel und/oder von dem mobilen Endgerät innerhalb der bestimmten Entfernung empfängt. Für den Fall, dass das Elektrofahrzeug stillsteht, ist die Steuereinrichtung dann dazu ausgebildet, den Elektromotor derart anzusteuern, dass dieser die Tankklappe von der Schließstellung in die Offenstellung verschwenkt, wenn die Sende- und Empfangsvorrichtung ein derartiges Funksignal von dem Ladestecker (und z.B. einer Zapfpistole) innerhalb einer bestimmten Entfernung empfängt.

In einer weiteren erfindungsgemäßen Ausführungsform umfasst die elektrisch betätigbare Tankklappeneinrichtung noch ein Getriebe. Der Elektromotor ist dabei über das Getriebe mit der Tankklappe verbunden. Bei dem Getriebe handelt es sich um ein selbsthemmendes Schneckengetriebe, wodurch ein unbefugtes Öffnen der Tankklappe erschwert oder verhindert wird.

Bevorzugt umfasst das Schneckengetriebe eine schraubenförmige Schnecke, die an der Motorwelle drehfest (drehgekoppelt) angeordnet ist bzw. gleich einteilig an der Motorwelle ausgebildet ist. Eine solche einteilige Ausbildung kann beispielsweise durch einen gemeinsamen Guss- und/oder Fräsprozess erfolgen. Das Schneckengetriebe umfasst außerdem ein Zahnrad (Schneckenrad), welches über seinen Zahnkranz in Eingriff mit der schraubenförmigen Schnecke steht. Die einzelnen Zähne des Zahnkranzes werden bei einem Schneckengetriebe häufig auch als Gänge bezeichnet. Das Zahnrad kann optional mit einer Scharnierachse drehgekoppelt sein. Ein Scharnierarm ist mit seinem ersten Ende, also mit seinem ersten Endbereich an dem Zahnrad bzw. an der Scharnierachse drehfest angeordnet. Ein zweites Ende, also ein zweiter Endbereich des Scharnierarms ist an der Tankklappe befestigt, wodurch bei einer Drehbewegung der Motorwelle die Tankklappe um eine Drehachse verschwenkbar ist, die durch das Zahnrad bzw. durch die Scharnierachse verläuft.

Das zweite Ende, also der zweite Endbereich des Scharnierarms ist insbesondere durch eine Schnapp- und/oder Rastverbindung insbesondere schraubenfrei, lötfrei, schweißfrei oder klebefrei mit einer Innenseite der Tankklappe verbunden.

Besonders bevorzugt umfasst die Tankklappeneinrichtung zum Verschwenken der Tankklappe von der Schließstellung in die Offenstellung lediglich genau einen Elektromotor, wobei die Bewegungsbahn der Tankklappe ausschließlich entlang eines Kreises oder einer Kurve (unterbrechungsfrei) verläuft.

Bei dem erfindungsgemäßen Elektrofahrzeug handelt es sich insbesondere um ein Motorrad, einen Personenkraftwagen, einen Bus oder einen Lastkraftwagen. Diese umfassen zumindest einen elektrischen Fahrmotor und zumindest eine Energiespeichereinrichtung, über die die elektrische Energie zur Versorgung des elektrischen Fahrmotors bezogen wird. Das Elektrofahrzeug umfasst außerdem eine elektrisch betätigbare Tankklappeneinrichtung wie sie eingangs beschrieben worden ist.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figur 1:: eine Ansicht eines Elektrofahrzeugs mit der erfindungsgemäßen elektrisch betätigbaren Tankklappeneinrichtung;
- Figur 2:: eine Übersicht über eine Steuereinrichtung zur Steuerung der erfindungsgemäßen elektrisch betätigbaren Tankklappeneinrichtung; und
- Figuren 3A bis 3C:: verschiedene räumliche Darstellungen der erfindungsgemäßen elektrisch betätigbaren Tankklappeneinrichtung in einer Schließstellung, Offenstellung und Zwischenstellung.

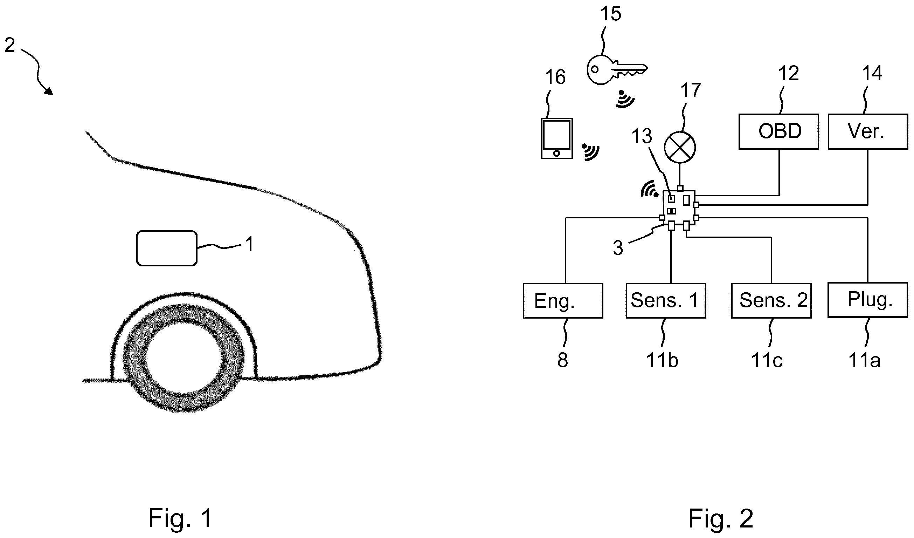

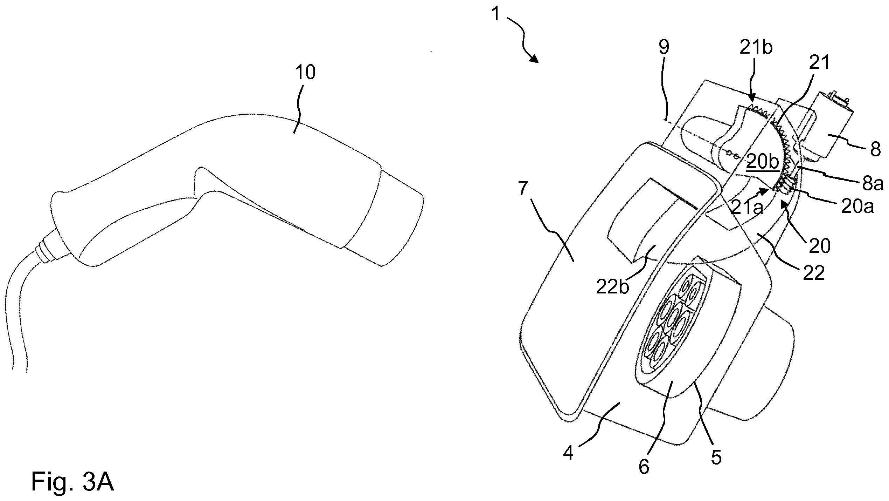

Figur 1 zeigt den Einsatz einer erfindungsgemäßen elektrisch betätigbaren Tankklappeneinrichtung 1 in einem Elektrofahrzeug 2. Im Hinblick auf die Figuren 3A bis 3C werden verschiedene Zustände der Tankklappeneinrichtung 1 näher beschrieben, wohingegen in Figur 2 eine Steuereinrichtung 3 zur Ansteuerung der Tankklappeneinrichtung 1 beschrieben wird.

In den Figuren 3A bis 3C ist eine Tankmulde 4 dargestellt, die insbesondere aus Kunststoff besteht oder solchen umfasst. Die Tankmulde wird in die Karosserie des Elektrofahrzeugs 2 eingesetzt. Unter Einsetzen ist auch ein Befestigen an der Karosserie zu verstehen. Die Tankmulde 4 umfasst dabei eine Öffnung 5, die von einer Ladebuchse 6 durchsetzt ist. In diesem Fall wird auch von einer Steckeröffnung 5 gesprochen. Diese Öffnung 5 könnte auch von einem Tankeinfüllstutzen durchsetzt sein (nicht dargestellt). Es könnten auch zwei Öffnungen bzw. eine gemeinsame Öffnung 5 ausgebildet sein, wenn sowohl eine Ladebuchse 6 als auch ein Tankeinfüllstutzen vorgesehen sein sollen (Hybridfahrzeuge). Weiterhin sind eine Tankklappe 7 und ein Elektromotor 8 vorgesehen. Die Tankklappe 7 ist dabei elektrisch gegenüber der Tankmulde 4 schwenkbar angeordnet. Sie kann insbesondere um eine Drehachse 9 herum geschwenkt bzw. gedreht werden. Der Elektromotor 8 wird von der Steuereinrichtung 3 angesteuert. Der Elektromotor 8 umfasst dabei eine Motorwelle 8a, die in eine erste Drehrichtung und in eine entgegengesetzte zweite Drehrichtung gedreht werden kann.

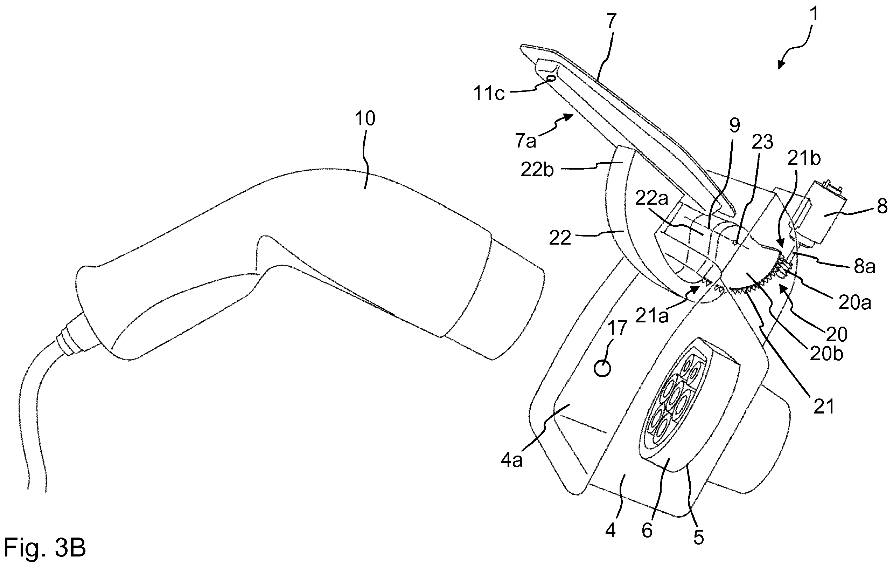

Die Tankklappe 7 steht dabei mit dem Elektromotor 8 in Wirkverbindung. Ein Drehen der Motorwelle 8a des Elektromotors 8 in die erste Drehrichtung führt dazu, dass sich die Tankklappe 7 von einer Schließstellung (in Figur 3A gezeigt) in eine Offenstellung (in Figur 3B gezeigt) verschwenkt werden kann. In der Schließstellung ist die Tankmulde 4 vorzugsweise vollständig von der Tankklappe 7 verschlossen. Die Tankmulde 4 ist in diesem Zustand vorzugsweise von außerhalb des Elektrofahrzeugs 2 nicht mehr zu erkennen. In der Offenstellung ist die Tankmulde 4 dagegen von außen sichtbar. In diesem Zustand kann ein Ladestecker 10, wie er in den Figuren 3A bis 3C dargestellt ist, in die Ladebuchse 6 unter Herstellung einer Steckverbindung eingeführt bzw. eingesteckt werden. Der Wortlaut "Ladestecker" 10 bzw. "Ladebuchse" 6 ist nicht dahingehend zu verstehen, dass der Ladestecker 6 Stecker in Form von Kontaktstiften aufwiest, die in die Ladebuchse 6, welche eine Steckeraufnahmeöffnung umfasst, eingreifen müssen. Es könnte auch umgekehrt sein, dass die Stecker in der Ladebuchse 6 angeordnet sind und in eine entsprechende Aufnahmeöffnung in dem Ladestecker 10 eingreifen.

Der Ladestecker 10 und die Ladebuchse 6 umfassen mehrere Anschlüsse, die beim Einführen des Ladesteckers 10 in die Ladebuchse 6 elektrisch miteinander verbunden werden. Insbesondere kann über den Ladestecker 10 eine Gleichspannung und/oder eine Wechselspannung an das Elektrofahrzeug 2 übertragen werden, mit der zumindest eine Energiespeichervorrichtung des Elektrofahrzeugs 2 aufgeladen werden kann.

Für den Fall, dass der Ladestecker 10 in die Ladebuchse 6 eingeführt ist und ein Ladevorgang stattfindet, findet ein Verriegeln des Ladesteckers 10 an der Ladebuchse 6 statt. Der Ladestecker 10 kann in diesem Fall nicht mehr abgezogen werden.

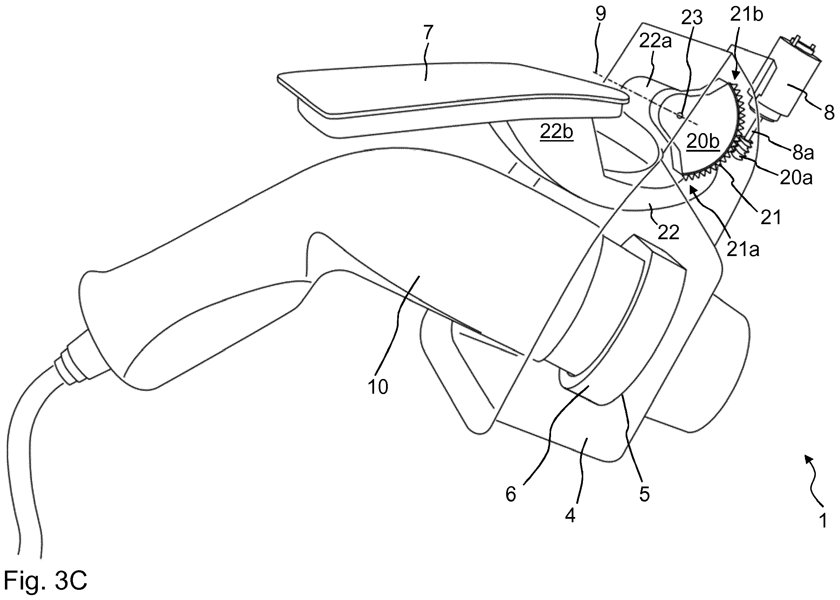

Die Steuereinrichtung 3 ist dazu ausgebildet, festzustellen, ob der Ladestecker 10 in die Ladebuchse 6 eingesetzt, also eingesteckt ist, wobei die Steuereinrichtung 3 in diesem Fall (Detektion ist erfolgt) weiter dazu ausgebildet ist, den Elektromotor 8 derart anzusteuern, dass dieser die Tankklappe 7 von der Offenstellung (Figur 3B) in eine Zwischenstellung (Figur 3C) verschwenkt, wobei sich die Zwischenstellung zwischen der Offenstellung (Figur 3B) und der Schließstellung (Figur 3A) befindet. In der Zwischenstellung verschließt die die Tankklappe 7 die Tankmulde 4 teilweise. Durch das teilweise Verschließen ist die Tankmulde 4 besser vor äußeren Witterungseinflüssen wie Schnee, Regen oder Laub geschützt. Gleichzeitig liegt die Tankklappe 7 in der Zwischenstellung näher an dem Elektrofahrzeug 2 an als in der Offenstellung. Dadurch wird die Gefahr verringert, dass andere Personen die Tankklappe 7 berühren und beschädigen können.

Die Steuereinrichtung 3 ist bei Detektion, dass ein Ladestecker 10 in der Ladebuchse 6 eingesetzt ist bzw. dass eine Zapfpistole in dem Tankeinfüllstutzen eingesetzt ist, dazu ausgebildet, ein Starten oder Bewegen des Fahrzeugs 2 zu verhindern.

Die elektrisch betätigbare Tankklappeneinrichtung 1 umfasst außerdem eine Sensoreinrichtung 11, die verschiedene Sensoren umfasst. Ein Ladesteckersensor 11a dient beispielsweise zur Detektion, ob der Ladestecker 10 in die Ladebuchse 6 eingesetzt ist. Der Ladesteckersensor 11a kann beispielsweise ein einfacher Stromkreis sein, der für den Fall geschlossen wird, dass der Ladestecker 10 in der Ladebuchse 6 angeordnet ist. Der Ladesteckersensor 11a ist dabei mit der Steuereinrichtung 3 verbunden, so dass die Steuereinrichtung 3 die Präsenz des Ladesteckers 10 in der Ladebuchse 6 feststellen kann. Für den Fall, dass ein Ladestecker 10 in der Ladebuchse 6 angeordnet ist, steuert die Steuereinrichtung 3 den Elektromotor 8 derart an, dass dieser die Tankklappe 7 von der Offenstellung in die Zwischenstellung verfährt. Dabei wird die Tankklappe 7 um einen bestimmten Winkel von der Offenstellung in Richtung der Schließstellung verschwenkt. In der Zwischenstellung ist die Tankklappe 7 gegenüber der Offenstellung um mehr als 10°, 20°, 30°, 40°, 50°, 60°, 70°, 80°, 90°, 100°, 110°, 120°, 130° oder 140°, aber um vorzugsweise weniger als 155°, 145°, 135°, 125°, 115°, 105°, 95°, 85°, 75°, 65°, 55°, 45°, 35°, 25° oder 15° in Richtung der Schließstellung verschwenkt.

Der Winkel, um welchen die Tankklappe 7 gegenüber der Offenstellung in die Schließstellung verschwenkt wird, kann beispielsweise in einer Speichereinrichtung innerhalb der Steuereinrichtung 3 hinterlegt sein. Dieser Winkel kann unterschiedlich gewählt werden, beispielsweise je nachdem, welcher Typ von Ladestecker 10 in die Ladebuchse 6 eingesteckt ist. Beim Einstecken des Ladesteckers 10 in die Ladebuchse 6 können Informationen über Art und Typ der Stromtankstelle mit der Steuereinrichtung 3 ausgetauscht werden, wobei entsprechende Typen von Ladesteckern 10 entsprechend den Typen von Stromtankstellen hinterlegt sind. Je nach hinterlegtem Typ des Ladesteckers 10, der zu verschiedenen Abmessungen des Ladesteckers 10 korrespondiert, kann ein entsprechender Winkel ausgewählt werden, um den die Tankklappe 7 von der Offenstellung in Richtung der Schließstellung verschwenkt wird, bis die Zwischenstellung erreicht wird.

In der Offenstellung ist die Tankklappe gegenüber der Schließstellung vorzugsweise um mehr als 60°, 70°, 80°, 90°, 100°, 110°, 120°, 130°, 140°, 150°, 160° oder 170°, aber um weniger als 180°, 175°, 165°, 155°, 145°, 135°, 125°, 115°, 105°, 95°, 85°, 75° oder 65° verschwenkt.

In der in Figur 3C gezeigten Zwischenstellung ist die Tankklappe 7 beabstandet, also berührungsfrei zu dem Ladestecker 10 angeordnet. Grundsätzlich könnte die Tankklappe 7 auch in Kontakt zu dem Ladestecker 10 stehen und diesen berühren.

Neben einem fest einprogrammierten Öffnungswinkel in der Zwischenstellung wäre es auch möglich, dass die erfindungsgemäße Tankklappeneinrichtung 1 zusätzliche Sensoren in der Sensoreinrichtung 11 aufweist. So könnte die Sensoreinrichtung 11 einen Motorstromsensor 11b zur Messung eines Motorstroms des Elektromotors 8 und/oder einen Abstandsensor 11c umfassen.

Für den Fall, das die Steuereinrichtung 3 einen Ladestecker 10, insbesondere über den Ladesteckersensor 11a detektiert, also für den Fall, dass der Ladestecker 10 in der Ladebuchse 6 angeordnet ist, ist die Steuereinrichtung 3 dazu ausgebildet, einen Motorstromwert des Motorstromsensors 11b mit einem Stromschwellwert zu vergleichen. In dem Fall, in dem der Elektromotor 8 die Tankklappe 7 von der Offenstellung in die Schließstellung verschwenkt, kann die Verschwenkbewegung bei Erreichen oder Überschreiten eines Stromschwellwerts gestoppt werden. Die Stromaufnahme des Elektromotors 8 steigt in dem Moment an, in dem die Tankklappe 7 auf den Ladestecker 10 aufläuft, diesen also berührt. In dem Moment ist auch die Zwischenstellung erreicht. In diesem Fall wird die Lademulde 4 trotz eingestecktem Ladestecker 10 optimal abgedeckt. Eine derartige Sensoreinrichtung 11 kann zusätzlich zu einer fest einprogrammierten Zwischenstellung vorgesehen sein. Eine solche Sensoreinrichtung 11 sorgt dann dafür, dass der Bewegungsablauf der Tancklappe 7 unterbrochen wird, wenn noch ein Hindernis im Bewegungsbereich der Tankklappe 7 vorhanden ist, auf welches die Tankklappe 7 aufläuft oder ansonsten auflaufen würde, bevor diese die Zwischenstellung erreicht.

Die in Figur 3C gezeigte Zwischenstellung, in welcher die Tankklappe 7 beabstandet zum Ladestecker 10 angeordnet ist, kann auch dadurch erreicht werden, dass der Abstandssensor 11c fortlaufend den Abstand misst, der sich zwischen der sich bewegenden Tankklappe 7 und dem stationär angeordneten Ladestecker 10 ergibt. Dieser so ermittelte Abstandswert kann mit einem Abstandsschwellwert verglichen werden. Der Elektromotor 8 wird dann durch die Steuereinrichtung 3 derart angesteuert, dass die Bewegung der Tankklappe 7 in Richtung der Schließstellung, also in Richtung des Ladesteckers 10, bei Erreichen oder Unterschreiten eines Abstandsschwellwertes gestoppt wird, wodurch die Zwischenstellung erreicht ist. Ein derartiger Abstandssensor 10c ist beispielsweise in Figur 3B gezeigt.

Bei dem Motorstromsensor 11b handelt es sich vorzugsweise um einen Shunt-Widerstand oder um einen Hallsensor. Der Motorstromwert besteht vorzugsweise aus einer Sequenz von Einzelmesswerten, aus denen ein Effektivwert, Mittelwert oder Maximalwert gebildet ist. Ein solcher Effektivwert, Mittelwert oder Maximalwert kann auch als konsolidierter Motorstromwert bezeichnet werden.

Bei dem Abstandssensor 11c handelt es sich dagegen um zumindest einen IR-Sensor, Ultraschallsensor, Lasersensor und/oder Radarsensor. Jeder dieser Sensoren umfasst einen Sender und einen Empfänger (Detektor). Der Abstandssensor ist dabei, wie beispielsweise in Figur 3B gezeigt, an einer Innenseite 7a der verschwenkbaren Tankklappe 7 angeordnet. Grundsätzlich könnte er auch an einer Außenseite der Tankmulde 4 angeordnet sein. Dieser Sachverhalt ist allerdings nicht dargestellt.

Bei dem gemessenen Abstandswert handelt es sich vorzugswiese um einen Effektivwert, Mittelwert, Minimalwert oder Maximalwert, der aus einer Sequenz von Einzelmesswerten gebildet ist. Dabei kann auch von einem konsolidierten Abstandswert gesprochen werden.

Der Motorstromsensor 11b kann auch dazu verwendet werden, um Verläufe des Motorstroms aufzuzeichnen. Insbesondere kann ein Verlauf des Motorstroms beim Verschwenken der Tankklappe 7 von der Schließstellung in die Offenstellung und/oder von der Offenstellung in die Schließstellung und/oder von der Zwischenstellung in die Offenstellung ermittelt werden. Dieser Verlauf kann dann mit einem in einer Speichereinheit gespeicherten Referenzverlauf durch die Steuereinrichtung 3 verglichen werden. Ist eine Abweichung eines gemessenen Verlaufs von einem gespeicherten Referenzverlauf größer als ein vorbestimmter Schwellwert, so kann auf einen Fehler, beispielsweise im Elektromotor 8, geschlossen werden. Die Steuereinrichtung 3 ist dann dazu ausgebildet, einen OBD-Fehler in einen Fehlerspeicher 12 zu schreiben. Dieser Fehlerspeicher 12 kann in regelmäßigen Abständen über eine Sende- und Empfangsvorrichtung 13 berührungslos ausgesendet bzw. ausgelesen werden. Der Inhalt dieses Fehlerspeichers 12 kann durch die Steuereinrichtung 3 insbesondere drahtlos mit der Sende- und Empfangsvorrichtung 13 über ein bestehendes Mobilfunknetz übertragen werden, so dass das benötigte Ersatzteil, wie beispielsweise ein neuer Elektromotor 8, beim nächsten Werkstattbesuch vorrätig ist und eingebaut werden kann. Der Fehlerspeicher 12 kann auch über eine OBD-Schnittstelle in einer Werkstatt kabelgebunden ausgelesen werden.

Der Elektromotor 8 ist vorzugsweise als Schrittmotor ausgebildet, wodurch die Zwischenstellung besonders einfach und genau angefahren werden kann.

Ohne dass der Ladestecker 10 in die Ladebuchse 6 eingesteckt ist, steuert die Steuereinrichtung 3 den Elektromotor 8 immer derart an, dass die Tankklappe 7 von der Schließstellung in die Offenstellung und von der Offenstellung in die Schließstellung verschwenkt wird. Die Zwischenstellung wird lediglich dann eingenommen, wenn der Ladestecker 10 in der Ladebuchse 6 angeordnet ist. In diesem Fall wird die Tankklappe 7 von der Offenstellung in die Zwischenstellung verschwenkt.

Eine Verschwenkung der Tankklappe 7 von der Offenstellung in die Zwischenstellung wird vorzugsweise nicht unmittelbar nach Einstecken des Ladesteckers 10 in die Ladebuchse 6 vorgenommen, sondern kann von weiteren Bedingungen abhängig gemacht werden.

Eine erste Bedingung könnte z.B. dann vorliegen, wenn die Steuereinrichtung 3 mit einer Zentralverriegelungseinrichtung 14 verbunden ist und wenn die Steuereinrichtung 3 detektiert, dass die Zentralverriegelungseinrichtung 14 das Elektrofahrzeug 2 verriegelt. In diesem Fall wäre die Steuereinrichtung 3 dazu ausgebildet, den Elektromotor 8 derart anzusteuern, dass dieser die Tankklappe 7 von der Offenstellung in die Zwischenstellung verschwenkt.

In einer weiteren Bedingung ist die Steuereinrichtung 3, wie bereits erläutert, dazu ausgebildet, über einen Ladesteckersensor 11a zu erfassen, ob eine Ladestecker 10 in der Ladebuchse 6 angeordnet ist. In diesem Fall würde eine Ladestecker-Verriegelungseinrichtung den Ladestecker 10 in der Ladebuchse 6 verriegeln. Sobald dies geschieht, könnte die Tankklappe 7 von der Offenstellung in die Zwischenstellung verschwenkt werden. Dieses Verschwenken kann dabei zeitlich verzögert werden. Das Verschwenken in die Zwischenstellung kann beispielsweise innerhalb von als 2 Minuten, 1 Minute, 30 Sekunden nach einer Detektion des Ladesteckers 10 erfolgen.

Umgekehrt gilt, dass die Steuereinrichtung 3 auch dazu ausgebildet ist, den Elektromotor 8 derart anzusteuern, dass dieser die Tankklappe 7 von der Zwischenstellung in die Offenstellung zurückverschwenkt. Dies wird insbesondere dann gemacht, wenn die Zentralverriegelungseinrichtung 14 das Elektrofahrzeug 2 entriegelt oder wenn die Ladestecker-Verriegelungseinrichtung den Ladestecker 10 in der Ladebuchse 6 entriegelt.

Das Verfahren der Tankklappe 7 von der Offenstellung in die Zwischenstellung kann auch dann erfolgen, wenn das Vorhandensein des Ladesteckers 10 in der Ladebuchse 6 detektiert wurde und wenn kein Funksignal von einem Autoschlüssel 15 oder einem bestimmten mobilen Endgerät 16 in einer bestimmten Entfernung um das Elektrofahrzeug 2 detektiert wird. Hierzu steht die Steuereinrichtung 3 mit der Sende- und Empfangsvorrichtung 13 in Kontakt. Die Sende- und Empfangsvorrichtung 13 ist dazu ausgebildet, ein Funksignal von dem Autoschlüssel 15 und/oder von dem bestimmten mobilen Endgerät 16 und/oder dem Ladestecker 10 in einer bestimmten Entfernung zu empfangen. Bei dem bestimmten mobilen Endgerät 16 kann es sich beispielsweise um ein Smartphone handeln, welches vom Fahrer des Elektrofahrzeugs 2 entsprechend freigeschalten worden ist und welches zum Beispiel über eine NFC-Schnittstelle verfügt (engl. near field communication). Wird kein solches Funksignal von dem Autoschlüssel 15 oder dem mobilen Endgerät 16 empfangen, dann hat sich der Fahrer mit seinem mobilen Endgerät 16 bzw. seinem Autoschlüssel 15 von dem Elektrofahrzeug 2 entfernt. In diesem Fall verfährt die Tankklappe 7 von der Offenstellung in die Zwischenstellung. Umgekehrt gilt, dass die Tankklappe 7 von der Zwischenstellung in die Offenstellung verfährt, wenn die Sende- und Empfangsvorrichtung 13 ein Funksignal in einer bestimmten Entfernung von dem mobilen Endgerät 16 bzw. dem Autoschlüssel 15 empfängt. Grundsätzlich könnte auch gelten, dass für den Fall, dass Elektrofahrzeug 2 stillsteht und ein Funksignal von einem Ladestecker 10 detektiert wird, die Steuereinrichtung 3 den Elektromotor 8 derart ansteuert, dass dieser die Tankklappe 7 von der Schließstellung in die Offenstellung verschwenkt.

Bei dem Funksignal handelt es sich vorzugsweise um ein Bluetooth®-Signal oder um ein RFID-Signal. Andere Funksignale sind ebenfalls denkbar. So kann es sich bei dem Funksignal auch um ein WLAN-Signal oder um ein ZigBee®-Signal oder um ein Z-Wave-Signal handeln.

Grundsätzlich ist die Steuereinrichtung 3 auch dazu ausgebildet, über die Sende- und Empfangsvorrichtung 13 eine Alarmnachricht drahtlos auszusenden, wenn die Tankklappe 7 ohne Ansteuerung von der Schließstellung oder von der Zwischenstellung in Richtung Offenstellung verschwenkt wird. Eine solche Alarmnachricht wird insbesondere über ein Mobilfunknetz ausgesendet. Beispielsweise über eine SMS. Diese Alarmnachricht gibt an, dass sich ein Unbekannter an der Tankklappeneinrichtung 1 zu schaffen macht.

Spätestens sobald das Elektrofahrzeug 2 in Betrieb gesetzt wird, wird die Tankklappe 7 von der Offenstellung in die Schließstellung verschwenkt.

In Figur 3B ist außerdem noch eine Beleuchtungsanordnung 17 dargestellt, die an einer Innenseite 4a der Tankmulde 4 angeordnet ist. Die Beleuchtungsanordnung 17 könnte auch an der Innenseite 7a der Tankklappe 7 angeordnet sein. Die Beleuchtungsanordnung 17 umfasst zumindest eine LED. Die Steuerungseinrichtung 3 ist dazu ausgebildet, die Beleuchtungsanordnung 17 zu aktivieren, wenn sich die Tankklappe 7 in der Offenstellung befindet und/oder wenn die Tankklappe 7 durch den Elektromotor 8 verschwenkt wird. Grundsätzlich könnte die Beleuchtungsanordnung 17 auch unterschiedliche Farben umfassen, um den Akkufüllstand anzuzeigen. Durch die Beleuchtungsanordnung 17 wird insbesondere die Ladebuchse 6 und/oder der Tankeinfüllstutzen derart angeleuchtet, dass ein Benutzer den Ladestecker 10 bzw. den Zapfpistole leichter einführen kann. Im Mittel findet das Anleuchten mit einer Lichtstärke von mehr als 20 cd oder 30 cd oder 40 cd oder 50 cd oder 60 cd oder 80 cd oder mehr als 100 cd aber vorzugsweise mit weniger als 100 cd statt.

So könnte es zukünftig möglich sein, dass der Ladestecker 10 von der Ladebuchse 6 automatisch entriegelt wird, wenn die Energiespeichervorrichtung des Elektrofahrzeugs 2 oberhalb eines bestimmten Schwellwerts oder vollständig geladen ist. Die Beleuchtungsanordnung 17 kann einen Lichtverlauf einstellen, der sich ändert, je höher der Akkufüllstand ist. Beispielsweise könnte das Licht der Beleuchtungsanordnung 17 von einer roten Farbe in eine grüne Farbe übergehen, die immer heller wird, je voller die Energiespeichervorrichtung geladen ist. Dadurch ist auch für andere Fahrer erkennbar, wann diese den Ladestecker 7 entfernen und an ihr eigenes Elektrofahrzeug anschließen können.

Damit die Tankklappe 7 durch den Elektromotor 8 verschwenkt werden kann, umfasst der Elektromotor 8 vorzugsweise noch ein Getriebe 20. Bei dem Getriebe 20 handelt es sich insbesondere um ein selbsthemmendes Schneckengetriebe 20, wodurch ein unbefugtes Öffnen der Tankklappe 7 erschwert oder verhindert wird. Das Schneckengetriebe 20 umfasst eine schraubenförmige Schnecke 20a, die an der Motorwelle 8a drehgekoppelt angeordnet ist.

Unter dem Begriff "drehgekoppelt" wird verstanden, dass eine Drehung der Motorwelle 8a unmittelbar in einer Drehung der Schnecke 20a resultiert.

Vorzugsweise ist die schraubenförmige Schnecke 20a hierzu einteilig mit der Motorwelle 8a ausgebildet. Beide können beispielsweise in einem gemeinsamen Guss- und/oder Fräsprozess hergestellt sein. Das Schneckengetriebe 20 umfasst außerdem noch ein Zahnrad 20b, welches mit seinem Zahnkranz 21 in Eingriff mit der schraubenförmigen Schnecke 20a steht. Ein Scharnierarm 22 ist mit seinem ersten Ende 22a drehgekoppelt, also drehfest an dem Zahnrad 20b angeordnet. Ein zweites Ende 22b des Scharnierarms 22 ist an der Tancklappe 7 befestigt. Bei einer Drehbewegung der Motorwelle 8a wird daher die Tankklappe 7 verschwenkt, weil der Zahnkranz 21 des Zahnrads 20b an der Schnecke 20a entlangläuft bzw. auf dieser abrollt und das Zahnrad 20b um eine Drehachse 9 gedreht wird.

Vorzugsweise ist das Zahnrad 20b mit einer Scharnierachse 23 drehgekoppelt. Der Scharnierarm 22 ist in diesem Fall mit seinem ersten Ende 22a an der Scharnierachse 23 drehfest angeordnet.

In diesem Fall wären der Scharnierarm 22 und das Zahnrad 20b unterschiedliche Gebilde. Der Scharnierarm 22 besteht vorzugsweise aus Kunststoff und weiter vorzugsweise einteilig aufgebaut. Auch das Schneckengetriebe 20 kann aus einem Kunststoff bestehen. Grundsätzlich könnte das Schneckengetriebe 20 auch aus einem anderen Material, insbesondere einem Metall bestehen. Es wäre auch möglich, dass die Schnecke 20a aus einem Metall bestehen, wohingegen das Zahnrad 20b aus einem Kunststoff besteht.

Grundsätzlich könnte das Zahnrad 20b zusammen mit dem Scharnierarm 22 auch einteilig ausgebildet sein. In diesem Fall wären das Zahnrad 20b und der Scharnierarm 22 in einem gemeinsamen Kunststoffspritzverfahren hergestellt. Würden bei aus einem Metall bestehen, dann werden sie vorzugsweise in einem gemeinsamen Guss- und/oder Stanz- und/oder Biegeprozess hergestellt.

Der Zahnkranz 21 des Zahnrads 20b erstreckt sich vorzugsweise nicht um 360° um die Drehachse 9 herum. Stattdessen erstreckt sich der Zahnkranz 21 vorzugsweise um weniger als 190°, 180°, 170°, 160°, 150°, 140° oder 130°, aber um mehr als 45°, 55°, 65°, 75°, 85°, 95°, 105°, 115° oder 125° um die Scharnierachse 23, also um die Drehachse 9 herum.

Der Zahnkranz 21 des Zahnrads 20b erstreckt sich vorzugsweise in einem Winkelbereich um die Drehachse 9 bzw. um das Zahnrad 20b herum, um den die Tankklappe 7 aufgeschwenkt werden soll.

Das Zahnrad 20b ist vorzugsweise an der Achse angespritzt, die in einem Gehäuse gelagert ist und mit dem Scharnierarm 22 kraftschlüssig verbunden, also drehgekoppelt ist.

In Figur 3A ist die Schließstellung der Tankklappe 7 gezeigt. In dieser Schließstellung liegt ein erster Endbereich 21a des Zahnkranzes 21 an der Schnecke 20a an, wobei sich der Zahnkranz 21 während des Verschwenkvorgangs von der Schließstellung in die Offenstellung an der Schnecke 20a abrollt. In der Offenstellung, die in Figur 3B gezeigt ist, liegt ein zweiter Endbereich 21b des Zahnkranzes 21 an der Schnecke 20a an.

Das zweite Ende 22b des Scharnierarms 22 ist vorzugsweise über eine Schnapp- und/oder Rastverbindung mit der Innenseite 7a der Tankklappe 7 verbunden. Dadurch wird die Herstellung stark vereinfacht.

Die Steuereinrichtung 3 ist dazu ausgebildet, den Elektromotor 8 derart anzusteuern, dass eine Verschwenkgeschwindigkeit der Tankklappe 7 einen rampenförmigen Verlauf, mit:
a) einer positiven Beschleunigungsphase;
b) einer Phase mit konstanter Verschwenkgeschwindigkeit; und
c) einer negativen Beschleunigungsphase
aufweist, wobei beide Beschleunigungsphasen jeweils zwischen 15% und 25% der gesamten Verschwenkzeit oder des gesamten Verschwenkwegs der Tankklappe 7 umfassen und wobei die Phase mit konstante Verschwenkgeschwindigkeit zwischen 70% und 50% der gesamten Verschwenkzeit oder des gesamten Verschwenkwegs der Tankklappe 7 umfasst.

Der Punkt, in welchem die negative Beschleunigungsphase eingeleitet wird, kann konstant sein oder von der Veschwenkgeschwindigkeit der Tankklappe 7 abhängen. Ist die Veschwenkgeschwindigkeit höher als ein erster Schwellwert, dann wird der Punkt (Zeitpunkt, Verschwenkweg), ab dem die negative Beschleunigung eingeleitet wird, früher (zeitlich bzw. räumlich) erreicht, als wenn die Veschwenkgeschwindigkeit niedriger als der erste Schwellwert ist.

Die Steuereinrichtung 3 steuert den Elektromotor 8 derart an, dass die Tancklappe 7 die Position für die Zwischenstellung nicht überschreitet bzw. über diese hinaus verschwenkt wird, wenn die Zwischenstellung eingenommen wird.

Weiterhin umfasst die elektrisch betätigbare Tankklappeneinrichtung 1 vorzugsweise noch eine Dichteinrichtung, die direkt an der Innenseite der Tancklappe 7 angeordnet ist und aus einem Kunststoff besteht oder einen solchen umfasst. Die Dichteinrichtung umfasst eine umlaufende Dichtlippe, die in einem 2K-Spritzverfahren an die Tankklappe 7 angespritzt ist, wodurch die Tankmulde 4 in der Schließstellung nach außerhalb der Tankklappeneinrichtung 1 abgedichtet ist. Regen und Schnee können in der Schließstellung der Tankklappe 7 dann nicht mehr in die Tankmulde 4 gelangen. Grundsätzlich wäre es möglich, dass noch ein Heizdraht vorgesehen ist, um zu verhindern, dass die Tankklappe 7 durch Frost festfriert und nicht mehr geöffnet werden kann. Die Steuereinrichtung 3 wäre dann dazu ausgebildet, einen Stromfluss durch den Heizdraht zu aktivieren.

Zusammenfassend werden noch einmal die wichtigsten Vorteile der erfindungsgemäßen Tankklappeneinrichtung 1 genannt. Die Tankklappeneinrichtung 1 umfasst zum Verschwenken der Tankklappe 7 von der Schließstellung in die Offenstellung lediglich einen Elektromotor 8. Die Tankklappe 7 wird von der Schließstellung außerdem immer direkt in die Offenstellung verschwenkt und erst von der Offenstellung kann die Zwischenstellung eingenommen werden. Die Zwischenstellung wird lediglich dann eingenommen, wenn ein Ladestecker 10 in der Ladebuchse 6 erkannt wurde. Der Bewegungsablauf von der Schließstellung in die Offenstellung ist dabei vorzugsweise unterbrechungsfrei (stetig). Gleiches gilt auch von der Offenstellung in die Schließstellung. Die Bewegungsbahn der Tankklappe 7 verläuft dabei ausschließlich entlang eines Kreises oder entlang einer Kurve. Die Bewegungsbahn verläuft insbesondere nicht entlang einer Geraden. Es könnte auch eine Federanordnung vorgesehen sein, die die Bewegung des Elektromotors 8 in eine Drehrichtung unterstützt.

Eine bevorzugte Ausführungsform der elektrisch betätigbaren Tankklappeneinrichtung 1 umfasst noch das folgende Merkmal:
- bei dem Funksignal handelt es sich um eine WLAN-Signal (IEEE 802.11*) oder um ein Bluetooth®-Signal (IEEE 802.15.*) oder um ein ZigBee®-Signal (IEEE 802.15.4) oder um ein Z-Wave-Signal oder um ein RFID-Signal.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

## Patentansprüche

1. Elektrisch betätigbare Tankklappeneinrichtung (1) für ein Fahrzeug (2), insbesondere für ein Elektrofahrzeug (2) mit den folgenden Merkmalen:
- es ist eine Tankmulde (4) aus Kunststoff zum Einsetzen in eine Karosserie des Fahrzeugs (2) vorgesehen;
- die Tankmulde (4) umfasst zumindest eine Öffnung (5), die von einer Ladebuchse (6) und/oder von einem Tankeinfüllstutzen durchsetzt ist;
- es sind eine Steuereinrichtung (3), ein Elektromotor (8) und eine Tancklappe (7) vorgesehen;
- die Tankklappe (7) ist gegenüber der Tankmulde (4) schwenkbar angeordnet;
- die Steuereinrichtung (3) ist dazu ausgebildet, den Elektromotor (8) derart anzusteuern, dass eine Motorwelle (8a) des Elektromotors (8) in eine erste Drehrichtung und in eine entgegengesetzte zweite Drehrichtung drehbar ist;
- die Tankklappe (7) steht mit dem Elektromotor (8) in Wirkverbindung, wobei ein Drehen der Motorwelle (8a) des Elektromotors (8) in die erste Drehrichtung dazu führt, dass die Tankklappe (7) von einer Schließstellung, in welcher die Tankklappe (7) die Tankmulde (4) verschließt, in eine Offenstellung, in welcher ein Ladestecker (10) in die Ladebuchse (6) oder eine Zapfpistole in den Tankeinfüllstutzen einführbar ist, verschwenkbar ist, wobei ein Drehen der Motorwelle (8a) des Elektromotors (8) in die zweite Drehrichtung dazu führt, dass die Tankklappe (7) von der Offenstellung wieder zurück in die Schließstellung verschwenkbar ist;
- die Steuereinrichtung (3) ist dazu ausgebildet, zu detektieren, ob ein Ladestecker (10) in die Ladebuchse (6) eingesetzt ist und/oder ob eine Zapfpistole in den Tankeinfüllstutzen eingesetzt ist, wobei die Steuereinrichtung (3) bei einer solchen Detektion weiter dazu ausgebildet ist, den Elektromotor (8) derart anzusteuern, dass dieser die Tankklappe (7) von der Offenstellung in eine Zwischenstellung verschwenkt, wobei sich die Zwischenstellung zwischen der Offenstellung und der Schließstellung befindet und wobei die Tankklappe (7) in der Zwischenstellung die Tankmulde (4) nur teilweise verschließt;
**gekennzeichnet durch** die folgenden Merkmale:
- in der Zwischenstellung ist die Tankklappe (7) zu dem Ladestecker (10) und/oder der Zapfpistole beabstandet angeordnet, wobei die Position der Zwischenstellung in einer Speichereinheit hinterlegt ist und wobei die Steuereinheit (3) dazu ausgebildet ist, den Elektromotor (8) derart anzusteuern, dass dieser die Tankklappe (7) bis zu der Position verschwenkt, die in der Speichereinheit für die Zwischenstellung hinterlegt ist.

2. Elektrisch betätigbare Tankklappeneinrichtung (1) nach Anspruch 1, **gekennzeichnet durch** die folgenden Merkmale:
- es ist eine Sensoreinrichtung (11) vorgesehen;
- die Sensoreinrichtung (11) umfasst zumindest einen:
i) Motorstromsensor (11b) in Form eines Shunt-Widerstands oder eines Hallsensors zur Messung eines Motorstroms des Elektromotors (8); und/oder
ii) Abstandssensor (11c) in Form eines IR-Sensors, Ultraschallsensors, Lasersensors und/oder Radarsensors, wobei der Abstandssensor an einer Innenseite (7a) der verschwenkbaren Tankklappe (7) und/oder an der Tankmulde angeordnet ist;
- die Sensoreinrichtung (11) ist mit der Steuereinrichtung (3) verbunden und die Steuereinrichtung (3) ist:
a) bei Detektion eines eingesteckten Ladesteckers (10) oder einer Zapfpistole dazu ausgebildet, einen **durch** die Sensoreinrichtung (11) erfassten Abstandswert zwischen der Tankklappe (7) und dem Ladestecker (10) mit einem Abstandsschwellwert zu vergleichen, wobei der Elektromotor (8), der die Tankklappe (7) von der Offenstellung in die Schließstellung verschwenkt, bei Erreichen oder Unterschreiten des Abstandsschwellwerts gestoppt wird, wodurch die gespeicherte Zwischenstellung oder bevor die gespeicherte Zwischenstellung und damit eine neue Zwischenstellung erreicht wird;
und/oder
b) dazu ausgebildet bei Verschwenken der Tankklappe (7) von der Schließstellung in die Offenstellung und/oder von der Offenstellung in die Schließstellung und/oder von der Zwischenstellung in die Offenstellung einen Verlauf des gemessenen Motorstroms mit einem Referenzverlauf zu vergleichen und bei einer Abweichung, die größer als ein Schwellwert ist, einen On-Board-Diagnose-Fehler (OBD-Fehler) in einen Fehlerspeicher (12) zu schreiben.

3. Elektrisch betätigbare Tankklappeneinrichtung (1) nach einem der vorherigen Ansprüche, **gekennzeichnet durch** die folgenden Merkmale:
- die Steuereinrichtung (3) ist dazu ausgebildet:
a) zu detektieren, ob eine Zentralverriegelungseinrichtung (14) des Fahrzeugs (2) dieses verriegelt; oder
zu detektieren, ob eine Ladestecker-Verriegelungseinrichtung des Fahrzeugs (2) den Ladestecker (10) in der Ladebuchse (6) verriegelt;
und
b) die Steuereinrichtung (3) ist dazu ausgebildet, den Elektromotor (8) derart anzusteuern, dass dieser die Tankklappe (7) von der Offenstellung in die Zwischenstellung verschwenkt, wenn die Zentralverriegelungseinrichtung (14) das Fahrzeug (2) verriegelt oder wenn die Ladestecker-Verriegelungseinrichtung des Fahrzeugs (2) den Ladestecker (10) in der Ladebuchse (6) verriegelt;
und/oder
- die Steuereinrichtung (3) ist dazu ausgebildet:
a) zu detektieren, ob die Zentralverriegelungseinrichtung (14) des Fahrzeugs (2) dieses entriegelt;
oder
zu detektieren, ob die Ladestecker-Verriegelungseinrichtung des Fahrzeugs (2) den Ladestecker (10) in der Ladebuchse (6) entriegelt;
und
b) die Steuereinrichtung (3) ist dazu ausgebildet, den Elektromotor (8) derart anzusteuern, dass dieser die Tankklappe (7) von der Zwischenstellung in die Offenstellung verschwenkt, wenn die Zentralverriegelungseinrichtung (14) das Fahrzeug (2) entriegelt oder wenn die Ladestecker-Verriegelungseinrichtung des Fahrzeugs (2) den Ladestecker (10) in der Ladebuchse (6) entriegelt.

4. Elektrisch betätigbare Tankklappeneinrichtung (1) nach einem der vorherigen Ansprüche, **gekennzeichnet durch** die folgenden Merkmale:
- die Steuereinrichtung (3) ist dazu ausgebildet, den Typ des Ladesteckers (10) oder der Zapfpistole zu detektieren;
- die Steuereinrichtung (3) ist dann dazu ausgebildet, für den detektierten Typ des Ladesteckers (10) oder der Zapfpistole die passende Position für die Zwischenstellung aus der Speichereinheit zu laden und die Tankklappe (7) bis zu dieser Position zu verfahren.

5. Elektrisch betätigbare Tankklappeneinrichtung (1) nach einem der vorherigen Ansprüche, **gekennzeichnet durch** die folgenden Merkmale:
- die Steuereinrichtung (3) umfasst eine Sende- und Empfangsvorrichtung (13), die dazu ausgebildet ist, ein Funksignal von einem Autoschlüssel (15) des Fahrzeugs (2) und/oder einem bestimmten mobilen Endgerät (16) und/oder von einem Ladestecker (10) und/oder von einer Zapfpistole in einer bestimmten Entfernung zu empfangen, und:
a) die Steuereinrichtung (3) ist dazu ausgebildet, den Elektromotor (8) derart anzusteuern, dass dieser die Tankklappe (7) von der Zwischenstellung in die Offenstellung verschwenkt, wenn die Sende- und Empfangsvorrichtung (13) ein Funksignal von dem Autoschlüssel (15) und/oder von dem mobilen Endgerät (16) in der bestimmten Entfernung empfängt; und/oder;
die Steuereinrichtung (3) ist dazu ausgebildet, den Elektromotor (8) derart anzusteuern, dass dieser die Tankklappe (7) von der Offenstellung in die Zwischenstellung verschwenkt, wenn die Sende- und Empfangsvorrichtung (13) kein Funksignal von dem Autoschlüssel (15) und/oder von dem mobilen Endgerät (16) in der bestimmten Entfernung empfängt;
und/oder
b) die Steuereinrichtung (3) ist bei einem Stillstand des Fahrzeugs (2) dazu ausgebildet, den Elektromotor (8) derart anzusteuern, dass dieser die Tankklappe (7) von der Schließstellung in die Offenstellung verschwenkt, wenn die Sende- und Empfangsvorrichtung (13) ein Funksignal von einem Ladestecker (10) und/oder von einer Zapfpistole in der bestimmten Entfernung empfängt.

6. Elektrisch betätigbare Tankklappeneinrichtung (1) nach Anspruch 5, **gekennzeichnet durch** das folgende Merkmal:
- die Steuereinrichtung (3) ist dazu ausgebildet, über die Sende- und Empfangsvorrichtung (13) eine Alarmnachricht drahtlos auszusenden, wenn die Tankklappe (7) ohne Ansteuerung des Elektromotors (8) von der Schließstellung oder von der Zwischenstellung in die Offenstellung verschwenkt wird.

7. Elektrisch betätigbare Tankklappeneinrichtung (1) nach einem der vorherigen Ansprüche, **gekennzeichnet durch** die folgenden Merkmale:
- die Steuereinrichtung (3) ist dazu ausgebildet, den Elektromotor (8) derart anzusteuern, dass dieser die Tankklappe (7) von der Offenstellung in die Schließstellung verschwenkt, wenn das Fahrzeug (2) gestartet wird; und/oder
- die Steuereinrichtung (3) ist bei Detektion, dass ein Ladestecker (10) in der Ladebuchse (6) eingesetzt ist bzw. dass eine Zapfpistole in dem Tankeinfüllstutzen eingesetzt ist, dazu ausgebildet, ein Starten oder Bewegen des Fahrzeugs (2) zu verhindern.

8. Elektrisch betätigbare Tankklappeneinrichtung (1) nach einem der vorherigen Ansprüche, **gekennzeichnet durch** die folgenden Merkmale:
- es ist eine Beleuchtungsanordnung (17) vorgesehen;
- die Beleuchtungsanordnung (17) ist an einer Innenseite (7a) der Tankklappe (7) und/oder an einer Innenseite (4a) Tankmulde (4) derart angeordnet, dass die Ladebuchse (6) und/oder der Tankeinfüllstutzen im Mittel mit einer Lichtstärke von mehr als 20 cd oder 30 cd oder 40 cd oder 50 cd oder 60 cd oder 80 cd oder mehr als 100 cd angeleuchtet wird;
- die Steuereinrichtung (3) ist dazu ausgebildet, die Beleuchtungsanordnung (17) zu aktivieren, wenn sich die Tankklappe (7) in der Offenstellung befindet und/oder wenn die Tankklappe (7) **durch** den Elektromotor (8) verschwenkt wird.

9. Elektrisch betätigbare Tankklappeneinrichtung (1) nach einem der vorherigen Ansprüche, **gekennzeichnet durch** das folgende Merkmal:
- die Steuereinrichtung (3) ist derart ausgebildet, dass diese den Elektromotor (8) derart ansteuert, dass die Tankklappe (7) mit einer höheren Geschwindigkeit von der Schließstellung in die Offenstellung verschwenkt wird als von der Offenstellung in die Zwischenstellung.

10. Elektrisch betätigbare Tankklappeneinrichtung (1) nach einem der vorherigen Ansprüche, **gekennzeichnet durch** die folgenden Merkmale:
- es ist eine Getriebe (20) vorgesehen;
- der Elektromotor (8) ist über das Getriebe (20) mit der Tankklappe (7) verbunden;
- das Getriebe (20) ist ein selbsthemmendes Schneckengetriebe (20), wodurch ein unbefugtes Öffnen der Tankklappe (7) erschwert oder verhindert wird;
- das Schneckengetriebe (20) umfasst eine schraubenförmige Schnecke (20a), die an der Motorwelle (8a) drehgekoppelt angeordnet ist oder einteilig mit der Motorwelle (8a) ausgebildet ist;
- das Schneckengetriebe (20) umfasst ein Zahnrad (20b), welches mit seinem Zahnkranz (21) in Eingriff mit der schraubenförmigen Schnecke (20a) steht und sich um eine Drehachse (9) herum dreht;
- ein Scharnierarm (22) ist mit seinem ersten Ende (22a) mit dem Zahnrad (20b) drehgekoppelt;
- ein zweites Ende (22b) des Scharnierarms (22) ist an der Tankklappe (7) befestigt, wodurch bei einer Drehbewegung der Motorwelle (8a) die Tancklappe (7) um die Drehachse (9) verschwenkbar ist.

11. Elektrisch betätigbare Tankklappeneinrichtung (1) nach Anspruch 10, **gekennzeichnet durch** die folgenden Merkmale:
- es ist eine Scharnierachse (23) vorgesehen, wobei das Zahnrad (20b) mit der Scharnierachse (23) drehgekoppelt ist und wobei der Scharnierarm (22) mit seinem ersten Ende (22a) an der Scharnierachse (23) drehfest angeordnet ist, wobei die Drehachse (9) **durch** die Scharnierachse (23) verläuft; oder
- das Zahnrad (20b) und der Scharnierarm (22) bestehen aus einem gemeinsamen Teil.

12. Elektrisch betätigbare Tankklappeneinrichtung (1) nach Anspruch 10 oder 11, **gekennzeichnet durch** die folgenden Merkmale:
- der Zahnkranz (21) des Zahnrads (20b) erstreckt sich um weniger als 190°, 180°, 170°, 160°, 150°, 140° oder 130°, aber um mehr als 45°, 55°, 65°, 75°, 85°, 95°, 105°, 115° oder 125° um das Zahnrad (20b) oder die Drehachse (9) herum;
- in der Schließstellung liegt ein erster Endbereich (21a) des Zahnkranzes (21) an der Schnecke (20a) an, wobei sich der Zahnkranz (21) während des Verschwenkvorgangs von der Schließstellung in die Offenstellung an der Schnecke (20a) abrollt und wobei ein zweiter Endbereich (21b) des Zahnkranzes (21) in der Offenstellung an der Schnecke (20a) anliegt.

13. Elektrisch betätigbare Tankklappeneinrichtung (1) nach einem der vorherigen Ansprüche, **gekennzeichnet durch** die folgenden Merkmale:
- die Tankklappeneinrichtung (1) umfasst zum Verschwenken der Tancklappe (7) von der Schließstellung in die Offenstellung lediglich einen Elektromotor (8); und/oder
- die Tankklappe (7) ist von der Schließstellung immer nur in die Offenstellung verschwenkbar und erst von der Offenstellung ist die Tankklappe (7) in die Zwischenstellung verschwenkbar; und/oder
- die Tankklappe (7) ist nur dann in die Zwischenstellung verschwenkbar, wenn ein Ladestecker (10) in die Ladebuchse (6) eingesetzt ist und/oder wenn eine Zapfpistole in den Tankeinfüllstutzen eingesetzt ist; und/oder
- eine Bewegungsbahn der Tankklappe (7) verläuft ausschließlich entlang eines Kreises oder einer Kurve; und/oder
- es ist eine Federanordnung vorgesehen, die die Bewegung des Elektromotors (8) in eine Drehrichtung unterstützt; und/oder
- der Elektromotor ist ein Schrittmotor.

14. Elektrisch betätigbare Tankklappeneinrichtung (1) nach einem der vorherigen Ansprüche, **gekennzeichnet durch** die folgenden Merkmale:
- die Steuereinrichtung (3) ist dazu ausgebildet, den Elektromotor (8) derart anzusteuern, dass eine Verschwenkgeschwindigkeit der Tankklappe (7) einen rampenförmigen Verlauf, mit:
a) einer positiven Beschleunigungsphase;
b) einer Phase mit konstanter Verschwenkgeschwindigkeit; und
c) einer negativen Beschleunigungsphase aufweist, wobei beide Beschleunigungsphasen jeweils zwischen 15% und 25% der gesamten Verschwenkzeit oder des gesamten Verschwenkwegs der Tankklappe (7) umfassen und wobei die Phase mit konstante Verschwenkgeschwindigkeit zwischen 70% und 50% der gesamten Verschwenkzeit oder des gesamten Verschwenkwegs der Tankklappe (7) umfasst.

15. Fahrzeug (2) in Form eines Elektrofahrzeugs (2) oder eines Hybridfahrzeugs oder eines Verbrennungsfahrzeugs wie eines Motorrads, Personenkraftwagens, Buses, Lkws mit einer elektrisch betätigbaren Tankklappeneinrichtung (1), die gemäß einem der vorherigen Ansprüche aufgebaut ist.

## Claims

1. Electrically actuatable fuel filler flap device (1) for a vehicle (2), in particular for an electric vehicle (2), the device comprising the following features:
- a fuel filler inlet (4) made of plastics material is provided for insertion into a body of the vehicle (2);
- the fuel filler inlet (4) comprises at least one opening (5), though which a charging socket (6) and/or a fuel filler neck passes;
- a control device (3), an electric motor (8) and a fuel filler flap (7) are provided;
- the fuel filler flap (7) is arranged such that it can pivot relative to the fuel filler inlet (4);
- the control device (3) is designed to control the electric motor (8) such that a motor shaft (8a) of the electric motor (8) is rotatable in a first direction of rotation and in a second, opposite direction of rotation;
- the fuel filler flap (7) is operatively connected to the electric motor (8), a rotation of the motor shaft (8a) of the electric motor (8) in the first direction of rotation causing the fuel filler flap (7) to be pivotable from a closed position, in which the fuel filler flap (7) closes the fuel filler inlet (4), into an open position, in which a charging plug (10) can be inserted into the charging socket (6) or a pump nozzle can be inserted into the fuel filler neck, a rotation of the motor shaft (8a) of the electric motor (8) in the second direction of rotation causing the fuel filler flap (7) to be pivotable from the open position back into the closed position;
- the control device (3) is designed to detect whether a charging plug (10) is inserted into the charging socket (6) and/or whether a fuel nozzle is inserted into the fuel filler neck, the control device (3) also being designed to control the electric motor (8) such that said motor pivots the fuel filler flap (7) from the open position into an intermediate position when there is a detection of this kind, the intermediate position being located between the open position and the closed position, and the fuel filler flap (7) only partially closing the fuel filler inlet (4) when in the intermediate position;
**characterised by** the following features:
- in the intermediate position, the fuel filler flap (7) is arranged spaced apart from the charging plug (10) and/or the fuel nozzle, the position of the intermediate position being stored in a memory unit, and the control unit (3) being designed to control the electric motor (8) such that said motor pivots the fuel filler flap (7) as far as the position that is stored in the memory unit for the intermediate position.

2. Electrically actuatable fuel filler flap device (1) according to claim 1, **characterised by** the following features:
- a sensor device (11) is provided;
- the sensor device (11) comprises at least one:
i) motor current sensor (11b) in the form of a shunt resistor or a Hall sensor, for measuring a motor current of the electric motor (8); and/or
ii) distance sensor (11c) in the form of an IR sensor, ultrasonic sensor, laser sensor and/or radar sensor, the distance sensor being arranged on an inner face (7a) of the pivotable fuel filler flap (7) and/or on the fuel filler inlet;
- the sensor device (11) is connected to the control device (3) and the control device (3) is:
a) designed to compare a distance value between the fuel filler flap (7) and the charging plug (10), which distance value is detected by the sensor device (11), with a distance threshold value when an inserted charging plug (10) or a fuel nozzle is detected, the electric motor (8) which pivots the fuel filler flap (7) from the open position into the closed position being stopped upon reaching or falling below the distance threshold value, as a result of which the stored intermediate position or before the stored intermediate position and thus a new intermediate position is reached; and/or
b) designed to compare a curve of the measured motor current with a reference curve when pivoting the fuel filler flap (7) from the closed position into the open position and/or from the open position into the closed position and/or from the intermediate position into the open position, and, in the case of a deviation which is greater than a threshold value, to record an on-board diagnostic error (OBD error) in an error memory (12).

3. Electrically actuatable fuel filler flap device (1) according to either of the preceding claims, **characterised by** the following features:
- the control device (3) is designed to:
a) detect whether a central locking device (14) of the vehicle (2) locks said vehicle; or
detect whether a charging plug locking device of the vehicle (2) locks the charging plug (10) in the charging socket (6); and
b) the control device (3) is designed to control the electric motor (8) such that said motor pivots the fuel filler flap (7) from the open position into the intermediate position when the central locking device (14) locks the vehicle (2) or when the charging plug locking device of the vehicle (2) locks the charging plug (10) in the charging socket (6); and/or
- the control device (3) is designed to:
a) detect whether the central locking device (14) of the vehicle (2) unlocks said vehicle; or
detect whether the charging plug locking device of the vehicle (2) unlocks the charging plug (10) in the charging socket (6); and
b) the control device (3) is designed to control the electric motor (8) such that said motor pivots the fuel filler flap (7) from the intermediate position into the open position when the central locking device (14) unlocks the vehicle (2) or when the charging plug locking device of the vehicle (2) unlocks the charging plug (10) in the charging socket (6).

4. Electrically actuatable fuel filler flap device (1) according to any of the preceding claims, **characterised by** the following features:
- the control device (3) is designed to detect the type of the charging plug (10) or of the fuel nozzle;
- the control device (3) is then designed to load from the memory unit the position for the intermediate position that is appropriate for the detected type of charging plug (10) or fuel nozzle, and to move the fuel filler flap (7) as far as this position.

5. Electrically actuatable fuel filler flap device (1) according to any of the preceding claims, **characterised by** the following features:
- the control device (3) comprises a transmitting and receiving apparatus (13) which is designed to receive a radio signal from a car key (15) of the vehicle (2) and/or from a specific mobile terminal (16) and/or from a charging plug (10) and/or from a fuel nozzle at a specific distance, and:
a) the control device (3) is designed to control the electric motor (8) such that said motor pivots the fuel filler flap (7) from the intermediate position into the open position when the transmitting and receiving apparatus (13) receives a radio signal from the car key (15) and/or from the mobile terminal (16) at the specific distance; and/or;
the control device (3) is designed to control the electric motor (8) such that said motor pivots the fuel filler flap (7) from the open position into the intermediate position when the transmitting and receiving apparatus (13) does not receive a radio signal from the car key (15) and/or from the mobile terminal (16) at the specific distance; and or
b) the control device (3) is designed to control the electric motor (8) such that, when the vehicle (2) is at a standstill, the motor pivots the fuel filler flap (7) from the closed position into the open position when the transmitting and receiving apparatus (13) receives a radio signal from a charging plug (10) and/or from a fuel nozzle at the specific distance.

6. Electrically actuatable fuel filler flap device (1) according to claim 5, **characterised by** the following feature:
- the control device (3) is designed to transmit an alarm message wirelessly via the transmitting and receiving apparatus (13) when the fuel filler flap (7) is pivoted from the closed position or from the intermediate position into the open position without the electric motor (8) control.

7. Electrically actuatable fuel filler flap device (1) according to any of the preceding claims, **characterised by** the following features:
- the control device (3) is designed to control the electric motor (8) such that said motor pivots the fuel filler flap (7) from the open position into the closed position when the vehicle (2) is started; and/or
- the control device (3) is designed to prevent the vehicle (2) from starting or moving upon detecting that a charging plug (10) is inserted in the charging socket (6) or that a fuel nozzle is inserted in the fuel filler neck.

8. Electrically actuatable fuel filler flap device (1) according to any of the preceding claims, **characterised by** the following features:
- a lighting arrangement (17) is provided;
- the lighting arrangement (17) is arranged on an inner face (7a) of the fuel filler flap (7) and/or on an inner face (4a) of the fuel filler inlet (4) such that the charging socket (6) and/or the fuel filler neck is illuminated by an average light intensity of more than 20 cd or 30 cd or 40 cd or 50 cd or 60 cd or 80 cd or more than 100 cd;
- the control device (3) is designed to activate the lighting arrangement (17) when the fuel filler flap (7) is in the open position and/or when the fuel filler flap (7) is pivoted by the electric motor (8).

9. Electrically actuatable fuel filler flap device (1) according to any of the preceding claims, **characterised by** the following feature:
- the control device (3) is designed such that it controls the electric motor (8) in such a way that the fuel filler flap (7) is pivoted from the closed position into the open position at a higher speed than from the open position into the intermediate position.

10. Electrically actuatable fuel filler flap device (1) according to any of the preceding claims, **characterised by** the following features:
- a gear system (20) is provided;
- the electric motor (8) is connected to the fuel filler flap (7) by means of the gear system (20);
- the gear system (20) is a self-locking worm gear system (20), as a result of which an unauthorized opening of the fuel filler flap (7) is made difficult or prevented;
- the worm gear system (20) comprises a helical worm (20a) which is arranged so as to be rotationally coupled to the motor shaft (8a) or integrally formed with the motor shaft (8a);
- the worm gear system (20) comprises a toothed wheel (20b) which engages with the helical worm (20a) by means of a toothed rim (21) of said toothed wheel and rotates about an axis of rotation (9);
- a hinge arm (22) is rotationally coupled at the first end thereof (22a) to the toothed wheel (20b);
- a second end (22b) of the hinge arm (22) is fixed to the fuel filler flap (7), as a result of which, when there is a rotational movement of the motor shaft (8a), the fuel filler flap (7) is pivotable about the axis of rotation (9).

11. Electrically actuatable fuel filler flap device (1) according to claim 10, **characterised by** the following features:
- a hinge pin (23) is provided, the toothed wheel (20b) being rotationally coupled to the hinge pin (23), and the first end (22a) of the hinge arm (22) being non-rotatably mounted on the hinge pin (23), the axis of rotation (9) extending through the hinge pin (23); or
- the toothed wheel (20b) and the hinge arm (22) consist of a common part.

12. Electrically actuatable fuel filler flap device (1) according to either claim 10 or claim 11, **characterised by** the following features:
- the toothed rim (21) of the toothed wheel (20b) extends less than 190°, 180°, 170°, 160°, 150°, 140° or 130° but more than 45°, 55°, 65°, 75°, 85°, 95°, 105°, 115° or 125° around the toothed wheel (20b) or the axis of rotation (9);
- in the closed position, a first end region (21a) of the toothed rim (21) rests on the worm (20a), the toothed rim (21) rolling on the worm (20a) during the pivoting process from the closed position into the open position, and, in the open position, a second end region (21b) of the toothed rim (21) resting on the worm (20a).

13. Electrically actuatable fuel filler flap device (1) according to any of the preceding claims, **characterised by** the following features:
- the fuel filler flap device (1) comprises only one electric motor (8) for pivoting the fuel filler flap (7) from the closed position into the open position; and/or
- from the closed position the fuel filler flap (7) is only pivotable into the open position and only from the open position is the fuel filler flap (7) pivotable into the intermediate position; and/or
- the fuel filler flap (7) is then only pivotable into the intermediate position when a charging plug (10) is inserted into the charging socket (6) and/or when a fuel nozzle is inserted into the fuel filler neck; and/or
- a movement path of the fuel filler flap (7) extends exclusively along a circle or a curve; and/or
- a spring arrangement is provided which assists the movement of the electric motor (8) in a direction of rotation; and/or
- the electric motor is a stepper motor.

14. Electrically actuatable fuel filler flap device (1) according to any of the preceding claims, **characterised by** the following features:
- the control device (3) is designed to control the electric motor (8) such that a pivoting speed of the fuel filler flap (7) has a ramp-shaped curve, having:
a) a positive acceleration phase;
b) a phase having a constant pivoting speed; and
c) a negative acceleration phase, the two acceleration phases each comprising between 15% and 25% of the total pivoting time or of the entire pivoting course of the fuel filler flap (7), and the phase having a constant pivoting speed comprising between 70% and 50% of the total pivoting time or of the entire pivoting course of the fuel filler flap (7).

15. Vehicle (2) in the form of an electric vehicle (2) or a hybrid vehicle or a combustion vehicle such as a motorcycle, passenger car, bus or truck, comprising an electrically actuatable fuel filler flap device (1) which is constructed according to any of the preceding claims.

## Revendications

1. Dispositif de trappe de réservoir (1) à actionnement électrique pour un véhicule (2), en particulier pour un véhicule électrique (2), présentant les éléments suivants :
- un évidement de réservoir (4) en matière plastique est prévu pour la mise en place dans la carrosserie du véhicule (2) ;
- l'évidement de réservoir (4) comporte au moins une ouverture (5) qui est traversée par une prise femelle de charge (6) et/ou une tubulure de remplissage de réservoir ;
- il est prévu un moyen de commande (3), un moteur électrique (8) et une trappe de réservoir (7) ;
- la trappe de réservoir (7) est disposée de façon mobile en pivotement par rapport à l'évidement de réservoir (4) ;
- le moyen de commande (3) est réalisé pour piloter le moteur électrique (8) de telle sorte qu'un arbre moteur (8a) du moteur électrique (8) puisse tourner dans un premier sens de rotation et dans un second sens de rotation opposé ;
- la trappe de réservoir (7) est reliée en liaison active avec le moteur électrique (8), une rotation de l'arbre moteur (8a) du moteur électrique (8) dans le premier sens de rotation faisant pivoter la trappe de réservoir (7) depuis une position fermée dans laquelle la trappe de réservoir (7) referme l'évidement de réservoir (4), jusque dans une position ouverte dans laquelle une prise mâle de charge (10) peut être insérée dans la prise femelle de charge (6) ou un pistolet distributeur peut être inséré dans la tubulure de remplissage de réservoir, une rotation de l'arbre moteur (8a) du moteur électrique (8) dans le second sens de rotation permettant de pivoter la trappe de réservoir (7) depuis la position ouverte en retour jusque dans la position fermée ;
- le moyen de commande (3) est réalisé pour détecter si une prise mâle de charge (10) est insérée dans la prise femelle de charge (6) et/ou si un pistolet distributeur est inséré dans la tubulure de remplissage de réservoir, le moyen de commande étant en outre réalisé pour, lors d'une telle détection, piloter le moteur électrique (8) de telle sorte que celui-ci fait pivoter la trappe de réservoir (7) depuis la position ouverte jusque dans une position intermédiaire, la position intermédiaire étant située entre la position ouverte et la position fermée, et la trappe de réservoir (7) ne refermant que partiellement l'évidement de réservoir (4), dans la position intermédiaire, **caractérisé par** les éléments suivants :
- dans la position intermédiaire, la trappe de réservoir (7) est disposée à distance de la prise mêle de charge (10) et/ou du pistolet distributeur, la position intermédiaire étant mémorisée dans une unité de mémorisation et l'unité de commande (3) étant réalisée pour piloter le moteur électrique (8) de telle sorte que celui-ci fait pivoter la trappe de réservoir (7) jusqu'à la position qui est mémorisée dans l'unité de mémorisation pour la position intermédiaire.

2. Dispositif de trappe de réservoir (1) à actionnement électrique selon la revendication 1, **caractérisé par** les éléments suivants :
- il est prévu un moyen capteur (11) ;
- le moyen capteur (11) comprend au moins :
i) un capteur de courant moteur (11b) sous la forme d'une résistance shunt ou d'un capteur de Hall pour mesurer un courant moteur du moteur électrique (8) ; et/ou
ii) un capteur de distance (11c) sous la forme d'un capteur à infrarouge, d'un capteur à ultrasons, d'un capteur laser et/ou d'un capteur radar, le capteur de distance étant disposé sur une face intérieure (7a) de la trappe de réservoir (7) pivotante et/ou au niveau de l'évidement de réservoir ;
- le moyen capteur (11) est connecté au moyen de commande (3) et le moyen de commande (3) est
a) réalisé pour comparer, lorsqu'une prise mâle de charge (10) enfichée ou un pistolet distributeur est détectée, une valeur de distance détectée par le moyen capteur (11) entre la trappe de réservoir (7) et la prise mâle de charge (10) à un seuil de distance, et le moteur électrique (8) qui fait pivoter la trappe de réservoir (7) depuis la position ouverte jusque dans la position fermée, est arrêté lors d'une atteinte ou d'un passage au-dessous du seuil de distance, moyennant quoi la position intermédiaire mémorisée est atteinte ou avant que la position intermédiaire mémorisée soit atteinte et qu'ainsi une nouvelle position intermédiaire est atteinte ;
et/ou
b) réalisé pour comparer, lors du pivotement de la trappe de réservoir (7) depuis la position fermée jusque dans la position ouverte et/ou depuis la position ouverte jusque dans la position intermédiaire et/ou depuis la position intermédiaire jusque dans la position ouverte, une évolution du courant moteur mesuré à une évolution de référence et pour inscrire, lors d'un écart supérieur à un seuil, une erreur de diagnostic on-board (erreur OBD) dans une mémoire d'erreur (12).

3. Dispositif de trappe de réservoir (1) à actionnement électrique selon l'une des revendications précédentes, **caractérisé par** les éléments suivants :
- le moyen de commande (3) est réalisé pour :
a) détecter si un moyen de verrouillage centralisé (14) du véhicule (2) le verrouille ; ou
détecter si un moyen de verrouillage de prise mâle de charge du véhicule (2) verrouille la prise mâle de charge (10) dans la prise femelle de charge (6) ;
et
b) le moyen de commande (3) est réalisé pour piloter le moteur électrique (8) de telle sorte que celui-ci fait pivoter la trappe de réservoir (7) depuis la position ouverte jusque dans la position intermédiaire, lorsque le moyen de verrouillage centralisé (14) verrouille le véhicule (2) ou lorsque le moyen de verrouillage de prise mâle de charge du véhicule (2) verrouille la prise mâle de charge (10) dans la prise femelle de charge (6) ;
et/ou
- le moyen de commande (3) est réalisé pour :
a) détecter si le moyen de verrouillage centralisé (14) du véhicule (2) le déverrouille ; ou
détecter si le moyen de verrouillage de prise mâle de charge du véhicule (2) déverrouille la prise mâle de charge (10) dans la prise femelle de charge (6) ;
et
b) le moyen de commande (3) est réalisé pour piloter le moteur électrique (8) de telle sorte que celui-ci fait pivoter la trappe de réservoir (7) depuis la position intermédiaire jusque dans la position ouverte, lorsque le moyen de verrouillage centralisé (14) déverrouille le véhicule (2) ou lorsque le moyen de verrouillage de prise mâle de charge du véhicule (2) déverrouille la prise mâle de charge (10) dans la prise femelle de charge (6).

4. Dispositif de trappe de réservoir (1) à actionnement électrique selon l'une des revendications précédentes, **caractérisé par** les éléments suivants :
- le moyen de commande (3) est réalisé pour détecter le type de prise mâle de charge (10) ou de pistolet distributeur ;
- le moyen de commande (3) est alors réalisé pour charger depuis l'unité de mémorisation la position adaptée pour la position intermédiaire et pour déplacer la trappe de réservoir (7) jusque dans cette position, pour le type détecté de prise mâle de charge (10) ou de pistolet distributeur.

5. Dispositif de trappe de réservoir (1) à actionnement électrique selon l'une des revendications précédentes, **caractérisé par** les éléments suivants :
- le moyen de commande (3) comprend un dispositif d'émission et de réception (13) qui est réalisé pour recevoir un signal radio en provenance d'une clé (15) du véhicule (2) et/ou d'un terminal mobile déterminé (16) et/ou d'une prise mâle de charge (10) et/ou d'un pistolet distributeur, à une distance déterminée, et
a) le moyen de commande (3) est réalisé pour piloter le moteur électrique (8) de telle sorte que celui-ci fait pivoter la trappe de réservoir (7) depuis la position intermédiaire jusque dans la position ouverte lorsque le dispositif d'émission et de réception (13) reçoit un signal radio en provenance de la clé (15) et/ou du terminal mobile (16), à la distance déterminée ; et/ou
le dispositif de commande (3) est réalisé pour piloter le moteur électrique (8) de telle sorte que celui-ci fait pivoter la trappe de réservoir (7) depuis la position ouverte jusque dans la position intermédiaire lorsque le dispositif d'émission et de réception (13) ne reçoit pas de signal radio en provenance de la clé (15) et/ou du terminal mobile (16), à la distance déterminée ; et/ou
b) le moyen de commande (3) est réalisé pour piloter, lors d'un arrêt du véhicule (2), le moteur électrique (8) de telle sorte que celui-ci fait pivoter la trappe de réservoir (7) depuis la position fermée jusque dans la position ouverte lorsque le dispositif d'émission et de réception (13) reçoit un signal radio en provenance d'une prise mâle de charge (10) et/ou d'un pistolet distributeur, à la distance déterminée.

6. Dispositif de trappe de réservoir (1) à actionnement électrique selon la revendication 5, **caractérisé par** l'élément suivant :
- le moyen de commande (3) est réalisé pour émettre sans fil un message d'alarme via le dispositif d'émission et de réception (13), lorsque la trappe de réservoir (7) est pivotée depuis la position fermée ou depuis la position intermédiaire jusque dans la position ouverte, sans pilotage du moteur électrique (8).

7. Dispositif de trappe de réservoir (1) à actionnement électrique selon l'une des revendications précédentes, **caractérisé par** les éléments suivants :
- le moyen de commande (3) est réalisé pour piloter le moteur électrique (8) de telle sorte que celui-ci fait pivoter la trappe de réservoir (7) depuis la position ouverte jusque dans la position fermée, lorsque le véhicule (2) est démarrée ; et/ou
- le moyen de commande (3) est réalisé pour empêcher un démarrage ou un déplacement du véhicule (2) lorsqu'il est détecté qu'une prise mâle de charge (10) est insérée dans la prise femelle de charge (6) ou qu'un pistolet distributeur est inséré dans la tubulure de remplissage de réservoir.

8. Dispositif de trappe de réservoir (1) à actionnement électrique selon l'une des revendications précédentes, **caractérisé par** les éléments suivants :
- il est prévu un ensemble d'éclairage (17) ;
- l'ensemble d'éclairage (17) est agencé sur une face intérieure (7a) de la trappe de réservoir (7) et/ou sur une face intérieure (4a) de l'évidement de réservoir (4), de telle sorte que la prise femelle de charge (6) et/ou la tubulure de remplissage de réservoir est éclairée en moyenne par une luminosité de plus de 20 cd ou 30 cd ou 40 cd ou 50 cd ou 60 cd ou 80 cd ou plus de 100 cd ;
- le moyen de commande (3) est réalisé pour activer l'ensemble d'éclairage (17) lorsque la trappe de réservoir (7) se trouve dans la position ouverte et/ou lorsque la trappe de réservoir (7) est pivotée par le moteur électrique (8).

9. Dispositif de trappe de réservoir (1) à actionnement électrique selon l'une des revendications précédentes, **caractérisé par** l'élément suivant :
- le moyen de commande (3) est réalisé de telle sorte que celui-ci pilote le moteur électrique (8) de telle sorte la trappe de réservoir (7) est pivotée depuis la position fermée jusque dans la position ouverte à une vitesse supérieure à celle du pivotement depuis la position ouverte jusque dans la position intermédiaire.

10. Dispositif de trappe de réservoir (1) à actionnement électrique selon l'une des revendications précédentes, **caractérisé par** les éléments suivants :
- il est prévu un mécanisme de transmission (20) ;
- le moteur électrique (8) est relié à la trappe de réservoir (7) via le mécanisme de transmission (20) ;
- le mécanisme de transmission (20) est un mécanisme à vis sans fin (20) autobloquant, rendant difficile ou empêchant une ouverture non autorisée de la trappe de réservoir (7) ;
- le mécanisme à vis sans fin (20) comprend une vis sans fin hélicoïdale (20a) qui est agencée solidairement en rotation sur l'arbre moteur (8a) ou qui est réalisée d'un seul tenant avec l'arbre moteur (8a) ;
- le mécanisme à vis sans fin (20) comprend une roue dentée (20b) ayant sa couronne dentée (21) en engagement avec la vis sans fin hélicoïdale (20a) et tournant autour d'un axe de rotation (9) ;
- un bras de charnière (22) a sa première extrémité (22a) couplée solidairement en rotation à la roue dentée ;
- une seconde extrémité (22b) du bras de charnière (22) est fixée à la trappe de réservoir (7), moyennant quoi, lors d'un mouvement de rotation de l'arbre moteur (8a), la trappe de réservoir (7) est mobile en pivotement autour de l'axe de rotation (9).

11. Dispositif de trappe de réservoir (1) à actionnement électrique selon la revendication 10, **caractérisé par** les éléments suivants :
- il est prévu un axe de charnière (23), la roue dentée (20b) étant couplée solidairement en rotation avec l'axe de charnière (23) et le bras de charnière (22) ayant sa première extrémité (22a) agencée solidairement en rotation (22) sur l'axe de charnière (23), l'axe de rotation (9) passant par l'axe de charnière (23) ; ou
- la roue dentée (20b) et le bras de charnière (22) sont constitués par une pièce commune.

12. Dispositif de trappe de réservoir (1) à actionnement électrique selon la revendication 10 ou 11, **caractérisé par** les éléments suivants :
- la couronne dentée (21) de la roue dentée (20b) s'étend autour de la roue dentée (20b) ou de l'axe de rotation (9) sur moins de 190°, 180°, 170°, 160°, 150°, 140° ou 130°, mais sur plus de 45°, 55°, 65°, 75°, 85°, 95°, 105°, 115° ou 125° ;
- dans la position fermée, une première zone d'extrémité (21a) de la couronne dentée (21) s'appuie contre la vis sans fin (20a), la couronne dentée (21) déroulant sur la vis sans fin (20a) pendant l'opération de pivotement depuis la position fermée jusque dans la position ouverte, et une seconde zone d'extrémité (21b) de la couronne dentée (21) s'appuie contre la vis sans fin (20a) dans la position ouverte.

13. Dispositif de trappe de réservoir (1) à actionnement électrique selon l'une des revendications précédentes, **caractérisé par** les éléments suivants :
- le dispositif de trappe de réservoir (1) ne comprend qu'un moteur électrique (8) pour pivoter la trappe de réservoir (7) depuis la position fermée jusque dans la position ouverte ; et/ou
- la trappe de réservoir (7) est mobile en pivotement depuis la position fermée uniquement dans la position ouverte, et la trappe de réservoir (7) est mobile en pivotement uniquement depuis la position ouverte jusque dans la position intermédiaire ; et/ou
- la trappe de réservoir (7) est mobile en pivotement jusque dans la position intermédiaire uniquement lorsqu'une prise mâle de charge (10) est insérée dans la prise femelle de charge (6) et/ou lorsqu'un pistolet distributeur est inséré dans la tubulure de remplissage de réservoir ; et/ou
- une trajectoire de mouvement de la trappe de réservoir (7) s'étend exclusivement le long d'un cercle ou d'une courbe ; et/ou
- il est prévu un ensemble ressort qui assiste le mouvement du moteur électrique (8) dans un sens de rotation ; et/ou
- le moteur électrique est un moteur pas à pas.

14. Dispositif de trappe de réservoir (1) à actionnement électrique selon l'une des revendications précédentes, **caractérisé par** les éléments suivants :
- le moyen de commande (3) est réalisé pour piloter le moteur électrique (8) de telle sorte qu'une vitesse de pivotement de la trappe de réservoir (7) présente une évolution en forme de rampe ayant :
a) une phase d'accélération positive ;
b) une phase de vitesse de pivotement constante ; et
c) une phase d'accélération négative,
les deux phases d'accélération incluent chacune entre 15 % et 25 % de la totalité du temps de pivotement ou de la totalité du trajet de pivotement de la trappe de réservoir (7), et la phase de vitesse de pivotement constante inclut entre 70 % et 50 % de la totalité du temps de pivotement ou de la totalité du trajet de pivotement de la trappe de réservoir (7).

15. Véhicule (2) sous la forme d'un véhicule électrique (2) ou d'un véhicule hybride ou d'un véhicule à combustion interne, tel qu'une motocyclette, une voiture particulière, un bus, un camion, ayant un dispositif de trappe de réservoir (1) à actionnement électrique, conçu selon l'une des revendications précédentes.
